(19)

Europäisches
Patentamt

European
Patent Office

Office européen
des brevets

(11)   **EP 2 444 370 A1**

(12)   **EUROPEAN PATENT APPLICATION**
published in accordance with Art. 153(4) EPC

(43) Date of publication:
   **25.04.2012 Bulletin 2012/17**

(51) Int Cl.:
   **C01B 31/02** *(2006.01)*   **B01J 23/70** *(2006.01)*

(21) Application number: **10789567.4**

(22) Date of filing: **17.06.2010**

(86) International application number:
   **PCT/JP2010/060319**

(87) International publication number:
   **WO 2010/147193 (23.12.2010 Gazette 2010/51)**

(84) Designated Contracting States:
   **AL AT BE BG CH CY CZ DE DK EE ES FI FR GB
   GR HR HU IE IS IT LI LT LU LV MC MK MT NL NO
   PL PT RO SE SI SK SM TR**

(30) Priority: **17.06.2009   JP 2009144723**

(71) Applicant: **National Institute of Advanced
   Industrial Science
   and Technology
   Tokyo 100-8921 (JP)**

(72) Inventors:
   • **HATA Kenji**
     **Tsukuba-shi**
     **Ibaraki 305-8565 (JP)**

   • **Futaba DON N.**
     **Tsukuba-shi**
     **Ibaraki 305-8565 (JP)**
   • **YUMURA Motoo**
     **Tsukuba-shi**
     **Ibaraki 305-8565 (JP)**

(74) Representative: **Calamita, Roberto
   Dehns
   St Bride's House
   10 Salisbury Square
   London
   EC4Y 8JD (GB)**

(54)   **METHOD FOR PRODUCING CARBON NANOTUBE ASSEMBLY HAVING HIGH SPECIFIC SURFACE AREA**

(57)   Disclosed is a method for continuously and stably producing a CNT assembly having a high specific surface area in a catalyst activating substance-containing, high-carbon-concentration environment.

Specifically disclosed is a method for growing a carbon nanotube by contacting a feedstock gas and a catalyst-activating substance to a catalyst on a base. The method includes: a formation step of supplying and contacting a reducing gas to the catalyst on the base, and heating at least one of the catalyst and the reducing gas to reduce the catalyst and/or particulate the catalyst; and a carbon nanotube growing step of contacting a carbon-containing, oxygen-free feedstock gas and an oxygen-containing catalyst-activating substance to at least one of the catalyst and the catalyst particles, and heating at least one of the catalyst, the catalyst particles, the feedstock gas, and the catalyst-activating substance to grow the carbon nanotube, wherein the ratio of the number concentration of the carbon atoms contained in the feedstock gas used in the carbon nanotube growing step to the number concentration of the oxygen atoms contained in the catalyst-activating substance used in the carbon nanotube growing step ranges from 0.5 to 200.

**EP 2 444 370 A1**

**Description**

[Technical Field]

The present invention relates to a method for efficiently producing an aligned single-walled CNT assembly of a high specific surface area continuously from a high-carbon-environment, catalyst activating substance-containing feedstock.

[Background Art]

There are high expectations for the development of carbon nanotubes (hereinafter, also referred to as "CNTs") in functional new materials such as in electronic device materials, optical element materials, conductive materials, and bio-related materials. To this end, carbon nanotubes have been studied from various angles, including use, quality, and mass producibility.

One known CNT producing method is the chemical vapor deposition method (hereinafter, also referred to as "CVD method"; see, for example, Patent Document 1). The method is characterized by contacting a feedstock gas such as a carbon compound with particles of catalyst in a high temperature atmosphere of about 500°C to 1,000°C, and enables CNT production under varying conditions, including the type and placement of a catalyst, the type of a feedstock gas, reducing gas, carrier gas, synthesis furnace, and reaction conditions. Because of these characteristics, the method has attracted interest as being suited for CNT mass production. The CVD method also has other advantages, including the ability to produce both single-walled carbon nanotubes (SWCNTs) and multi-walled carbon nanotubes (MWCNTs), and the ability to produce large numbers of CNTs vertically aligned on a base surface supporting a catalyst. A CNT assembly of a high specific surface area with orientation is very preferable as a substance and energy storage material in various applications such as in supercapacitor electrodes, and heat transfer/heat-release materials having directivity.

Single-walled CNTs, in particular, have attracted interest as material of, for example , electronic devices, capacitor electrodes, MEMS members, and the filler of functional composite materials for their excellent characteristics, including electrical characteristics (extremely high current density), thermal characteristics (heat conductivity comparable to that of diamond), optical characteristics (emission in optical communication band wavelength ranges), hydrogen storage capacity, and metal catalyst supporting ability, and for their characteristics as both a semiconductor and a metal.

Further, a single-walled CNT assembly with a few metal impurities and with a specific surface area of 800 $m^2/g$ to 2600 $m^2/g$ is effective as a catalyst support or an energy and substance storage material, making it a preferred material for applications such as in supercapacitors and actuators.

An advent of an aligned CNT assembly with such a high specific surface area is expected to greatly enhance the applicable area of CNTs. However, for practical applications, it is important to improve the mass producibility of the aligned CNT assembly having a high specific surface area.

With the conventional chemical vapor deposition method, however, the carbon impurities that generate during the synthesis of CNT cover the catalyst particles and easily deactivate the catalyst, preventing efficient CNT growth. The catalytic activity is typically about several percent with a lifetime of about 1 min. It is therefore common practice in the conventional single-walled CNT growth step to perform synthesis in a low carbon concentration atmosphere. The low carbon concentration atmosphere as used herein means a growth atmosphere in which the proportion of the feedstock gas in a gas containing the feedstock gas and atmosphere gas is about 0.1 to 1%. Increasing the carbon concentration using a conventional synthesis method deactivates the catalyst even more easily, and further lowers the CNT growth efficiency.

Accordingly, because of the small supply of the feedstock gas to the catalyst, the conventional synthesis method involves a low CNT growth rate, and only enables production of a single-walled CNT assembly as high as about several ten micrometers. The method is also problematic in terms of cost, because the carbon efficiency which is a proportion actually converted into CNT from the carbon contained in the feedstock gas that has been in contact with the catalyst on a base in the growth step, is notably poor, and the most of the feedstock gas is wasted.

As previously reported by the present inventors (Non-Patent Document 1), it was found that a very trace amount of water or other catalyst-activating substances contained in a reaction atmosphere dramatically improves catalyst efficiency, and enables production of a high-purity, high-specific-surface-area, highly aligned single-walled CNT with improved efficiency.
In this method, the catalyst-activating substance added to the CNT synthesis atmosphere removes the carbon impurities covering the catalyst particles, and cleans the base surface of a catalyst film. As a result, the catalytic activity significantly improves, and the lifetime becomes longer. The improved catalytic activity and the longer lifetime attained by the addition of the catalyst-activating substance increased the single-walled CNT growth time to about several ten minutes from about mere 2 minutes in the conventional method, and improved the catalytic activity to 84% from mere several percent in the conventional method. This made it possible to obtain a single-walled CNT assembly of a height several hundred times higher than the conventional 4 $\mu$m (a height of 2.5 mm in Non-Patent Document 1, a 625-fold increase from 4 $\mu$m). This is because the catalytic activity greatly increases in the presence of the catalyst-activating substance, and makes it possible to prevent the catalyst from losing activity even under a high-carbon-concentration environment. The CNT is therefore able to grow for extended time periods at a significantly increased growth rate. As used herein, "high-carbon-concentration environment" means a growth atmosphere in which the proportion of the feedstock gas in a gas containing the feedstock gas, atmosphere gas, and catalyst-activating substance is about 2 to 20%.

[Citation List]

[Patent Document]

[Patent Document 1] JP-A-2003-171108

[Non-Patent Document]

[Non-Patent Document 1] Kenji Hata et al., Water-Assisted Highly Efficient Synthesis of Impuriy-Free Single-Walled Carbon Nanotubes, SCIENCE, 2004.11.19, vol.306, p.1362-1364

[Summary of Invention]

[Problems that the Invention is to Solve]

The CNT synthesis in a catalyst activating substance-containing, high-carbon-concentration environment brought a marked improvement in growth efficiency, carbon efficiency, and growth rate over the conventional technique. However, unlike the conventional synthesis technique, CNT assembly production by the present technique involves technical problems specific to the catalyst activating substance-containing, high-carbon-concentration environment.

The conventional CNT assembly production using water as the catalyst-activating substance and ethylene as the feedstock gas involves an extremely low optimum water content with respect to the ethylene. For example, in the case of Non-Patent Document 1, the optimum ratio of the number concentration of the carbon atoms contained in ethylene to the number concentration of the oxygen atoms contained in water is about 1,500.

Further, the synthesis in a high-carbon-concentration environment involves the excess decomposition of the feedstock gas, and generates many carbon impurities. The generated carbon impurities adhere to areas around the base in a synthesis furnace, particularly in the downstream region, and react with a very trace amount of water. Because the water is consumed, it becomes difficult to stably supply an optimum amount of water to the catalyst. Further, adhesion of the carbon impurities to the CNTs significantly reduces the specific surface area.

Particularly, when a CNT assembly of a high specific surface area is to be continuously produced in large quantity, the generated carbon impurities accumulate and consume water, and make the CNT assembly production unstable. Specifically, the amount of water supplied to the catalyst deviates from the optimum value in multiple synthesis runs, and as a result the specific surface area and the yield of the product CNT assembly lower.

Further, when a CNT assembly of a high specific surface area is to be produced in large quantity with a base having a large surface area per volume as a laminate of granular or linear material, the catalyst-activating substance comes into contact with the catalyst and the base multiple times. Because the catalyst-activating substance is consumed at every contact with the catalyst and the base, it becomes very difficult to uniformly supply the catalyst-activating substance in an optimum amount over the whole laminate.

The present invention has been made over the problems of the conventional techniques, and it is a primary object of the invention to provide a method for continuously and stably producing a CNT assembly of a high specific surface area in a catalyst activating substance-containing, high-carbon-concentration environment.

Another primary object of the present invention is to provide a method for producing a CNT assembly of a high specific surface area in a substantially uniform fashion over a large area by contacting a carbon weight flux-adjusted feedstock gas and catalyst-activating substance in substantially uniform supply amounts per unit area of a catalyst-disposed region of a base.

It is another primary object of the present invention to provide a method for producing a CNT assembly of a high specific surface area over the whole laminate of granular or linear material.

Note that the "CNT assembly" as used herein refers to an assembly of a plurality of CNTs grown in a certain direction from a growth base, and encompasses objects obtained by detaching the CNT assembly from a base. The CNT assembly may be in the form of a powder after being detached.

[Means for Solving the Problems]

The present inventors conducted intensive studies on a chemical vapor deposition method in which a feedstock gas and a catalyst-activating substance are contacted to a catalyst in a high-temperature furnace to grow a single-walled CNT assembly of a high specific surface area, and reduced the optimum number concentration ratio of the carbon atoms and oxygen atoms that contact the catalyst. This was achieved by reducing the concentration of the feedstock gas with the use of a carbon source (for example, acetylene) having better CNT synthesis efficiency than ethylene, instead of using ethylene conventionally used as the feedstock gas, and/or by improving the concentration of the catalyst-activating substance with the use of a catalyst-activating substance (for example, carbon dioxide) having poorer catalyst activation efficiency than water, instead of using water conventionally used as the catalyst-activating substance.

In this way, the catalyst-activating substance remains in sufficient amounts even when slightly consumed, and can be supplied to the catalyst in a near optimum amount. This has made it possible to continuously grow a single-walled CNT assembly with high yield.

A method for producing a carbon nanotube assembly according to the present invention is a method whereby a feedstock gas and a catalyst-activating substance are contacted to a catalyst on a base to grow a carbon nanotube, the method including:

a formation step of supplying and contacting a reducing gas to the catalyst on the base, and heating at least one of the catalyst and the reducing gas to reduce the catalyst and/or particulate the catalyst; and
a carbon nanotube growing step of contacting a carbon-containing, oxygen-free feedstock gas and an oxygen-containing catalyst-activating substance to at least one of the reduced catalyst and the catalyst particles formed in the formation step, and heating at least one of the catalyst, the catalyst particles, the feedstock gas, and the catalyst-activating substance to grow the carbon nanotube,
wherein the ratio of the number concentration of the carbon atoms contained in the feedstock gas used in the carbon nanotube growing step to the number concentration of the oxygen atoms contained in the catalyst-activating substance used in the carbon nanotube growing step ranges from 0.5 to 200.

It is preferable in the carbon nanotube assembly producing method that the feedstock gas contact at least one of the catalyst and the catalyst particles on the base substantially vertically with respect to a surface of the base after forming multidirectional feedstock gas flows in directions substantially parallel to the surface of the base.

It is preferable in the carbon nanotube assembly producing method that the feedstock gas and an atmosphere gas obtained by adjusting a carbon weight flux from feedstock gas and atmosphere gas supply amounts be supplied to a synthesis furnace to contact the feedstock gas in a substantially uniform amount to at least one of the catalyst and the catalyst particles on the base and grow the carbon nanotube.

It is preferable that the carbon nanotube assembly producing method further include a carbon impurity adhesion suppressing step after the carbon nanotube growing step.

It is preferable in the carbon nanotube assembly producing method that the feedstock gas be supplied after adjusting a carbon weight flux from feedstock gas and atmosphere gas supply amounts.

It is preferable in the carbon nanotube assembly producing method that the cross sectional area of a channel that flows the feedstock gas substantially coincide with the area of the surface where the feedstock gas flowing channel crosses the catalyst.

A carbon nanotube assembly producing method according to the present invention is a method whereby a feedstock gas and a catalyst-activating substance are contacted to a catalyst-supporting granular or linear base to grow a carbon nanotube,
the method including:

a formation step of supplying and contacting a reducing gas to the catalyst, and heating at least one of the catalyst and the reducing gas to reduce the catalyst and/or particulate the catalyst; and
a carbon nanotube growing step of contacting a carbon-containing, oxygen-free feedstock gas and an oxygen-containing catalyst-activating substance to at least one of the reduced catalyst and the catalyst particles formed in the formation step, and heating at least one of the catalyst, the catalyst particles, the feedstock gas, and the catalyst-activating substance to grow the carbon nanotube,
wherein the ratio of the number concentration of the carbon atoms contained in the feedstock gas used in the carbon nanotube growing step to the number concentration of the oxygen atoms contained in the catalyst-activating substance used in the carbon nanotube growing step ranges from 0.5 to 200.

It is preferable in the carbon nanotube assembly producing method that the granular or linear base have an average diameter of from 10 $\mu$m to 1 cm.

It is preferable in the carbon nanotube assembly producing method that the feedstock gas contact at least one of the catalyst and the catalyst particles on the base substantially vertically with respect to a surface of the base after forming multidirectional feedstock gas flows in directions substantially parallel to the surface of the base.

It is preferable in the carbon nanotube assembly producing method that the feedstock gas and an atmosphere gas obtained by adjusting a carbon weight flux from feedstock gas and atmosphere gas supply amounts be supplied to a synthesis furnace to contact the feedstock gas in a substantially uniform amount to at least one of the catalyst and the catalyst particles on the base and grow the carbon nanotube.

It is preferable that the carbon nanotube assembly producing method further include a carbon impurity adhesion suppressing step after the carbon nanotube growing step.

It is preferable in the carbon nanotube assembly producing method that the feedstock gas be supplied after adjusting a carbon weight flux from feedstock gas and atmosphere gas supply amounts.

It is preferable in the carbon nanotube assembly producing method that the cross sectional area of a channel that flows the feedstock gas substantially coincide with the area of the surface where the feedstock gas flowing channel crosses the catalyst.

[Advantage of the Invention]

The method of the present invention enables CNT assembly production in higher carbon efficiency than in the conventional technique while suppressing carbon impurity generation. This makes it possible to greatly reduce feedstock gas wastes, and to easily produce a CNT assembly both stably and continuously. The CNT assembly so produced has a high specific surface area with the individual CNTs orderly aligned, and is readily moldable because of low weight density. The method therefore has good potential in industrial applications.

[Brief Description of Drawings]

Fig. 1 is a diagram schematically representing an example of a CNT producing apparatus to which the present invention is applicable.

Fig. 2 is a diagram representing the shapes and forms of gas flow forming means.

Fig. 3 is a diagram defining a carbon weight flux, as an example.

Fig. 4 is a diagram defining a carbon weight flux, as an example.

Fig. 5 is a graph representing the relationship between the growth time and height of a CNT assembly with varying amounts of introduced carbon dioxide.

Fig. 6 is a photographic representation showing an example of a CNT aligned assembly produced in Example 1.

Fig. 7 represents the yield of a CNT assembly in each synthesis of the CNT assembly synthesized in 45 continuous runs in Example 1.

Fig. 8 is a photographic representation showing an example of a CNT assembly produced in Example 4.

Fig. 9 is a photographic representation showing an example of a CNT assembly produced in Example 4.

Fig. 10 is a photographic representation showing an example of a CNT assembly produced in Comparative Example 6.

Fig. 11 is a photographic representation showing an example of a CNT assembly produced in Example 7.

Fig. 12 is a photographic representation showing an example of a CNT assembly produced in Example 7.

[Mode for Carrying Out the Invention]

The present invention is specifically described below with reference to the accompanying drawings.

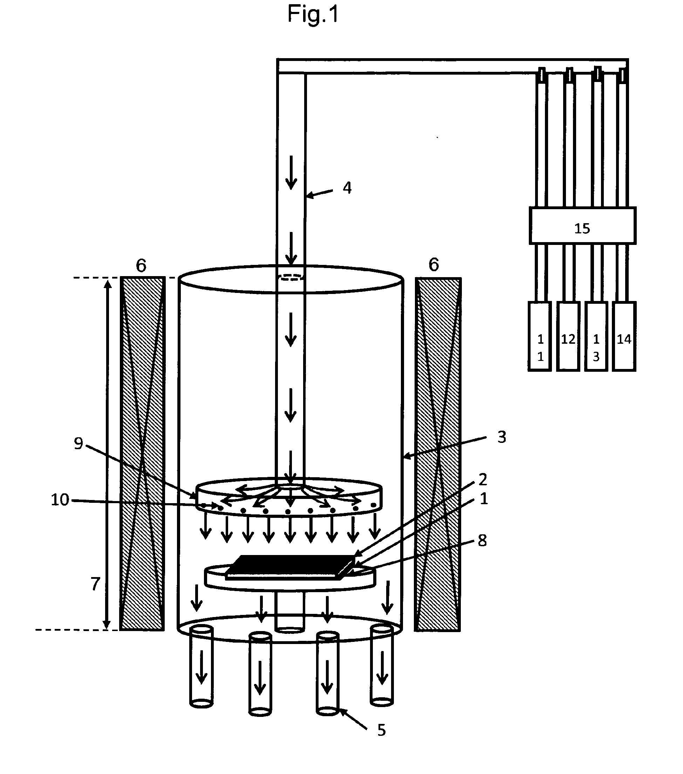

Fig. 1 illustrates an example of a CNT producing apparatus to which the present invention is applicable. The CNT producing apparatus includes: a synthesis furnace 3 made of, for example, fused quartz, housing a base 1 having a catalyst layer 2; a gas supply pipe 4 provided through the upper wall of the synthesis furnace 3 and in communication with the synthesis furnace 3; gas exhaust pipes 5 provided through the downstream bottom wall or side wall and in communication with the synthesis furnace 3; heating means 6 realized by, for example, a resistance heating coil, surrounding the synthesis furnace 3; heat temperature adjusting means that adjusts the temperature inside the furnace to a predetermined temperature; and a heating region 7 as a region inside the synthesis furnace 3 heated to a predetermined temperature by the heating means 6 and the heat temperature adjusting means. A base holder 8 is also provided with which the base 1 having the catalyst layer 2 is held in the heating region 7 inside the synthesis furnace 3 in a manner allowing the heat volume to exceed the evacuation volume.

The catalyst layer 2 represents a surface or space that contains a catalyst on the base 1. Generally, the catalyst layer 2 represents a base surface when the base 1 is in the form a flat plate. When the base 1 is an assembly of particles or beads, the catalyst layer 2 represents a space that contains these forms of the base 1.

Inside the heating region 7 above the base holder 8 and/or the catalyst layer 2, gas flow forming means 9 is disposed that distributes and disperses the feedstock gas and catalyst-activating substance supplied through the gas supply pipe 4, and thus form multidirectional flows of the feedstock gas and the catalyst-activating substance. The gas flow forming means 9 forms feedstock gas and catalyst-activating substance flows in multiple directions substantially parallel to the surface of the base 1. Further, the gas flow forming means 9 is provided with a plurality of gas blowing means 10 that forms flows of the feedstock gas and the catalyst-activating substance in directions substantially vertical to the surface of the base 1. The gas blowing means 10 is arranged within the same plane substantially parallel to the surface of the base 1.

With the gas flow forming means 9, the feedstock gas and catalyst-activating substance supplied through the gas supply pipe 4 can contact the catalyst from directions substantially vertical to the surface of the base 1 after being developed and dispersed over a surface substantially parallel to the surface of the base 1. In this way, the feedstock gas and catalyst-activating substance can contact the catalyst in substantially uniform supply amounts per unit area of the catalyst-disposed region on the base 1.

The CNT producing apparatus includes a feedstock gas cylinder 11 that stores a carbon compound as the CNT feedstock; a catalyst-activating substance cylinder 12 that stores the catalyst-activating substance; an atmosphere gas cylinder 13 that stores the carrier gas of the feedstock gas and the catalyst-activating substance; and a reducing gas cylinder 14 for reducing the catalyst. A carbon weight flux adjusting means 15 is provided that enables the supply amount of the gas from each cylinder to be controlled with a gas flow unit. The carbon weight flux adjusting means 15 is suited for contacting the feedstock gas and catalyst-activating substance to the catalyst in optimum amounts.

A check valve, a flow control valve, and a flow rate sensor are provided at appropriate positions of the gas supply pipe 4, the gas exhaust pipes 5, and each supply unit. The open/close of each flow control valve is appropriately controlled with a control signal from a control unit (not illustrated) so that the feedstock gas, the catalyst-activating substance, the atmosphere gas, and the reducing gas are continuously or intermittently supplied into the synthesis furnace 3 through the gas supply pipe 4 in predetermined flow amounts according to the reaction process.

[Synthesis Furnace]

The synthesis furnace 3 is a furnace that houses the catalyst-supporting base 1, and in which CNT synthesis is performed. The synthesis furnace 3 may be made of material that does not inhibit CNT growth, and that can house the catalyst-supporting base 1 at a growth temperature while maintaining uniform heat inside the furnace. For synthesis of large quantities of CNTs, the synthesis furnace 3 may be equipped with a system with which the base can be supplied and taken out multiple times or continuously.

For the present invention to be more effective, it is preferable that the synthesis furnace 3 be vertical, rather than horizontal. The vertical synthesis furnace 3 is one in which the feedstock gas and catalyst-activating substance are supplied in a perpendicular (vertical) direction. Supplying the feedstock gas and catalyst-activating substance in a perpendicular (vertical) direction is preferable, because it easily allows the feedstock gas and catalyst-activating substance to vertically contact the catalyst on the base 1 arranged horizontally.

[Material of CNT Producing Apparatus]

The material used in part of the CNT producing apparatus, particularly the synthesis furnace 3, the gas flow forming means 9, and the gas blowing means 10 may be appropriately selected from known materials, as long as it allows these components to be functional. A heat-resistant alloy may be used as the material for part of the CNT producing apparatus, particularly the synthesis furnace 3, the gas flow forming means 9, and the gas blowing means 10. The heat-resistant alloy, with its excellent processibility and mechanical strength, is preferably used for a part of the CNT producing apparatus having a complicated structure.

Examples of the heat-resistant alloy include heat-resistant steel, stainless steel, and nickel-based alloy.

The term "heat-resistant steel" is commonly used for materials that contain Fe as the main component and in which the other alloy concentration is 50% or less. Steels containing Fe as the main component and in which the other alloy concentration is 50% or less and the Cr content is about 12% or more are generally called stainless steel. Examples of the nickel-based alloy include alloys that contain Mo, Cr, Fe, or other elements added to Ni.

Specifically, SUS310, Inconel 600, Inconel 601, Inconel 625, Incoloy 800, MC alloy, Haynes 230 alloy, and the like are preferred in terms of heat resistance, mechanical strength, chemical stability, cost, and the like.

[Carburization Preventing Layer]

A carburization preventing layer may be formed in part of the CNT producing apparatus, particularly on at least one of the front and back surfaces of the synthesis furnace 3, the gas flow forming means 9, and the gas blowing means 10. Preferably, the carburization preventing layer is formed on both the front and back surfaces. The carburization preventing layer is preferred for suppressing a chemical reaction between a part of the CNT producing apparatus and the feedstock gas. The carburization preventing layer is also preferred for preventing a part of the CNT producing apparatus from being carburized and deformed by decomposition of the feedstock gas.

Desirably, the carburization preventing layer is configured from a metallic element or a compound thereof that does not exhibit catalytic activity by itself. For example, metal oxides such as alumina ($Ai_2O_3$), silicon oxide ($SiO_2$), zirconia ($ZrO_2$), and magnesium oxide (MgO), and metals such as copper and aluminum may be used as such materials.

[Gas Supply Pipe]

The gas supply pipe 4 is a pipe through which materials such as the feedstock gas, the catalyst-activating substance, the atmosphere gas, and the reducing gas supplied from the carbon weight flux adjusting means are supplied into the synthesis furnace 3 and/or the gas flow forming means 9. Note that, the gas supply pipe 4 can be used to supply not only gas but liquid. Preferably, the gas supply pipe 4 is provided through the opening provided through the upper wall and/or side wall of the synthesis furnace 3, in order to supply the feedstock gas and catalyst-activating substance in a perpendicular (vertical) direction. The pipe may be partially inserted into the synthesis furnace 3, or an end thereof may reside in the heating region 7. The pipe inserted into the synthesis furnace 3 may be made of material that does not react with the gases, and that maintains its quality and shape even under high heat. Examples include quartz and various metallic materials.

[Gas Exhaust Pipe]

The gas exhaust pipes 5 is a means, such as a pipe and a duct, through which materials such as the atmosphere gas, the catalyst-activating substance, the reducing gas, and the feedstock gas are evacuated from the synthesis furnace 3. Note that the gas exhaust pipes 5 may evacuate not only gas but liquid. The gas exhaust pipes 5 may be made of material that does not react with the gases, and that maintains its quality and shape. Examples include quartz and various metallic materials. Preferably, the gas exhaust pipes 5 is provided into the synthesis furnace 3 through the opening provided through the bottom wall of the synthesis furnace 3, and/or through the side wall below the gas supply pipe 4. This arrangement of the gas supply pipe 4 and the gas exhaust pipes 5 is preferable, because it allows the feedstock gas and catalyst-activating substance to be supplied to the catalyst in a perpendicular (vertical) direction inside the synthesis furnace 3, and allows the feedstock gas to contact the surface of the catalyst layer 2 on the base 1 in a substantially uniform amount by suppressing a turbulent flow, as will be described later.

[Heating Means and Heating Region]

The heating means 6 is a device provided around the synthesis furnace 3 to heat the synthesis furnace 3. The heating means 6 maybe selected from the existing heating means, for example, from those using an electrically-heated wire, or those using infrared rays. Note that the heating region 7 as used herein means a space inside the synthesis furnace 3 heated by the heating means 6.

[Gas Flow Forming Means]

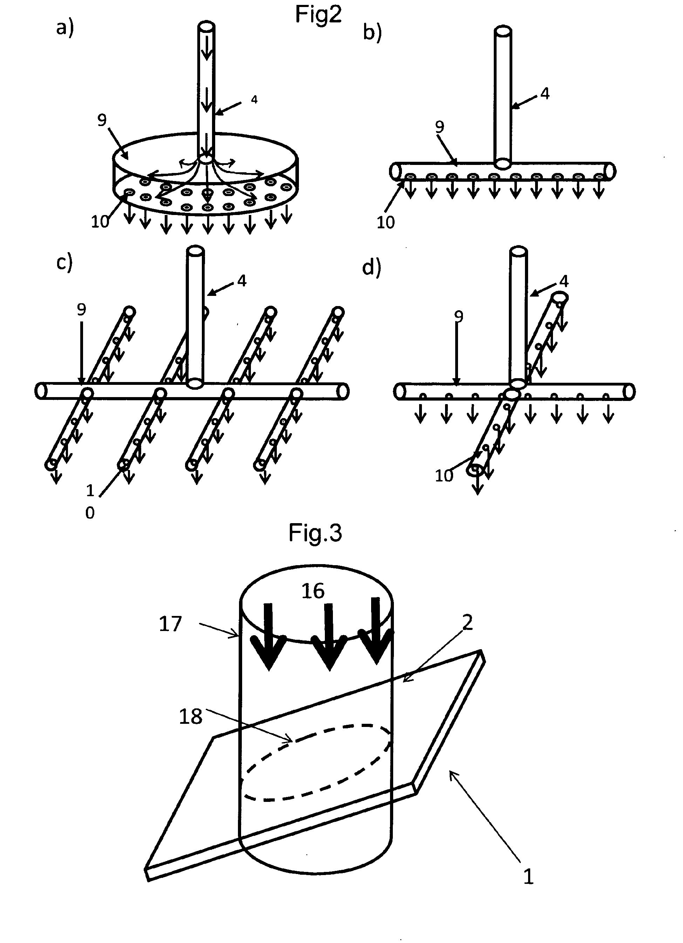

The gas flow forming means 9 is a means by which materials such as the feedstock gas, the catalyst-activating substance, the atmosphere gas, and the reducing gas supplied from the gas supply pipe 4 are distributed in a plurality of directions. The material, shape, and other attributes of the gas flow forming means 9 are not particularly limited and known means can be appropriately used, as long as materials such as the feedstock gas and the catalyst-activating substance can be distributed and dispersed in a plurality of directions. The gas flow forming means 9 may have the shape or form as illustrated in Fig. 2, including a disc, a cylinder, a hollow structure on a surface, a tubular pipe, a tubular pipe with branches, and combinations of these. The use of the gas flow forming means 9 is highly effective, because it allows the feedstock gas and catalyst-activating substance supplied at one location through the gas supply pipe 4 to be distributed and dispersed over a surface, and enables the feedstock gas and catalyst-activating substance to contact in substantially uniform supply amounts per unit area of the catalyst-disposed region on the surface base 1. The feedstock gas and catalyst-activating substance distributed in a plurality of directions by the gas flow forming means 9 form multidirectional flows of feedstock gas and catalyst-activating substance. It is preferable that the axis lines of the multidirectional flows of the feedstock gas and catalyst-activating substance create a maximum angle of 90 degrees or more (more preferably, 180 degrees or more), in order that the feedstock gas and catalyst-activating substance supplied at one location through the gas supply pipe 4 are distributed and dispersed over a surface. Further, it is preferable that the gas flow forming means 9 has a symmetrical axis and be in communication with the gas supply pipe 4 on the symmetrical axis, in order that the feedstock gas and catalyst-activating substance supplied at one location through the gas supply pipe 4 are distributed and dispersed over a surface. Further, in order to obtain the foregoing effects, it is preferable that the gas flow forming means 9 form multidirectional flows of feedstock gas and catalyst-activating substance substantially parallel to the surface of the base 1. The substantially parallel direction is the direction that makes an angle of at least 45° and less than 135° between the normal line of the base 1 and the axis lines of the flows of the feedstock gas and catalyst-activating substance distributed and dispersed in multiple directions by the gas flow forming means 9. As used herein, "substantially uniform supply amount" means that the supply of the feedstock gas and catalyst-activating substance is uniform to such an extent that the effects of the present invention are obtained, specifically an amount that enables CNT synthesis from substantially the whole surface of the catalyst-disposed region on the base 1.

[Gas Blowing Means]

The gas blowing means 10 is a means by which materials such as the feedstock gas, the catalyst-activating substance, the atmosphere gas, and the reducing gas supplied into the synthesis furnace 3 through the gas supply pipe 4 are blown inside the synthesis furnace 3. By appropriately dispersing and arranging a plurality of gas blowing means 10 on the gas flow forming means 10, the feedstock gas can effectively contact the catalyst on the base 1 in uniform amounts. Examples of the gas blowing means 10 include blow holes and nozzles arranged on the gas flow forming means 9 configured from, for example, a pipe or a hollow member, and porous materials that have substantially infinite numbers of blow holes. However, any form may be appropriately selected, as long as the foregoing effects can be obtained.

In order to obtain the foregoing effects, it is preferable that a plurality of gas blowing means 10 be provided on the gas flow forming means 9. Preferably, the gas blowing means 10 is provided at such intervals that the blown gas from the plurality of gas blowing means 10 forms substantially uniform flows of the feedstock gas and catalyst-activating substance. As used herein, "substantially uniform" means that the feedstock gas and catalyst-activating substance flow in substantially uniform amounts across the flat cross sectional surface of the feedstock gas and catalyst-activating substance flows. In order to obtain the foregoing effects, it is preferable that the plurality of gas blowing means be arranged to form substantially vertical flows of feedstock gas and catalyst-activating substance with respect to the surface of the base 1. Further, in order to obtain the foregoing effects, it is preferable that the plurality of gas blowing means 10 be arranged within the same plane substantially parallel to the surface of the base 1.

As used herein, "substantially vertical direction" means a direction that makes an angle of 0° or more and less than 45° between the normal line of the base 1 and the ejection axis line of the gas blowing means 10. Specifically, the gas flows blown out of the gas blowing means 10 provided on the gas supply pipe 4 vertically contact the catalyst layer 2 of the base 1.

It is preferable that the angle between the gas blowing means 10 and the gas supply pipe 4 has a maximum value of 90 degrees or more (more preferably, 180 degrees or more), in order that the feedstock gas and catalyst-activating substance supplied at one location through the gas supply pipe 4 are distributed and dispersed over a surface.

[Carbon Weight Flux]

Broadly, carbon weight flux represents the weight of the carbon that comes into contact per unit area of the catalyst layer 2 per unit time. The carbon weight flux as a measure of the carbon amount in contact with the catalyst is an important CNT production condition.

[Carbon Weight Flux Adjusting Means]

The carbon weight flux adjusting means 15 is a means by which the supply amount of the feedstock gas providing the feedstock carbon compound for CNTs, and the supply amount of the atmosphere gas as the carrier gas of the feedstock gas and catalyst-activating substance are adjusted with other members such as the gas flow unit, so as to supply any carbon weight flux into the furnace. With the use of this means, the carbon weight flux can be adjusted, and an optimum amount of carbon can be supplied to the catalyst, making it possible to obtain the effects of the present invention.

CNTs can be efficiently produced at high speed with high yield under a catalyst activating substance-containing, high-carbon-concentration environment when the carbon weight flux is adjusted to 40 $g/cm^2/min$ to 4,300 $g/cm^2/min$ with the carbon weight flux adjusting means 15. The objects of the present invention can thus be achieved in this way.

With a carbon weight flux less than 40 g/cm$^2$/min, the feedstock gas cannot be sufficiently supplied to the catalyst, and CNTs cannot be produced at high speed. On the other hand, a carbon weight flux in excess of 4,300 g/cm$^2$/min generates large quantities of carbon impurities, and these carbon impurities adhere to the synthesis furnace 3 and to the CNTs produced.

[Carbon Weight Flux Specification]

Broadly, carbon weight flux represents the weight of the carbon that comes into contact per unit area of the catalyst layer 2 per unit time. As shown in Fig. 3, a carbon weight flux 16 represents the weight of the carbon that comes into contact with a unit cross sectional area of the catalyst layer 2 per unit time, and is calculated by dividing the weight of the carbon atoms contained in the feedstock gas that passes through the feedstock gas channel 17 per unit time by the area 18 of the surface where the catalyst layer 2 (the surface or space containing the catalyst on the base 1) and the feedstock gas channel 17 cross. The carbon weight flux 18 can be set by adjustments made by the carbon weight flux adjusting means 15 configured from a mass flow meter, or the like.

$$\text{Carbon weight flux (g/cm}^2\text{/min)} = 12 \times \text{the number of carbons contained}$$
$$\text{per molecule of the feedstock gas} \times \text{flow amount of the feedstock gas} \times \text{furnace}$$
$$\text{pressure/(gas constant} \times \text{absolute temperature inside the heated furnace)/area of}$$
$$\text{the intersecting surface}$$

The area of the surface intersecting with the channel is calculated as substantially zero if a flat substrate as the base 1 is disposed parallel to the channel. This indicates that most of the carbon supplied by the feedstock gas does not contact the catalyst layer 2. Accordingly, if CNTs were produced in this layout, most of the feedstock gas supplied into the synthesis furnace 3 does not contact the catalyst.

Thus, for efficient and high-yield CNT production, it is preferable that the catalyst layer 2 (the surface or space containing the catalyst on the base 1) and the feedstock gas channel 17 generally cross vertically, so that CNTs can be efficiently produced with high yield.

Desirably, the cross sectional area of the feedstock gas channel 17 generally coincides with the area 18 where the feedstock gas channel 17 crosses the catalyst layer 2. With the feedstock gas channel 17, the base 1, and the catalyst layer 2 disposed in this fashion, most of the carbon contained in the feedstock gas can contact the catalyst layer 2, and CNTs can be efficiency produced at high speed.

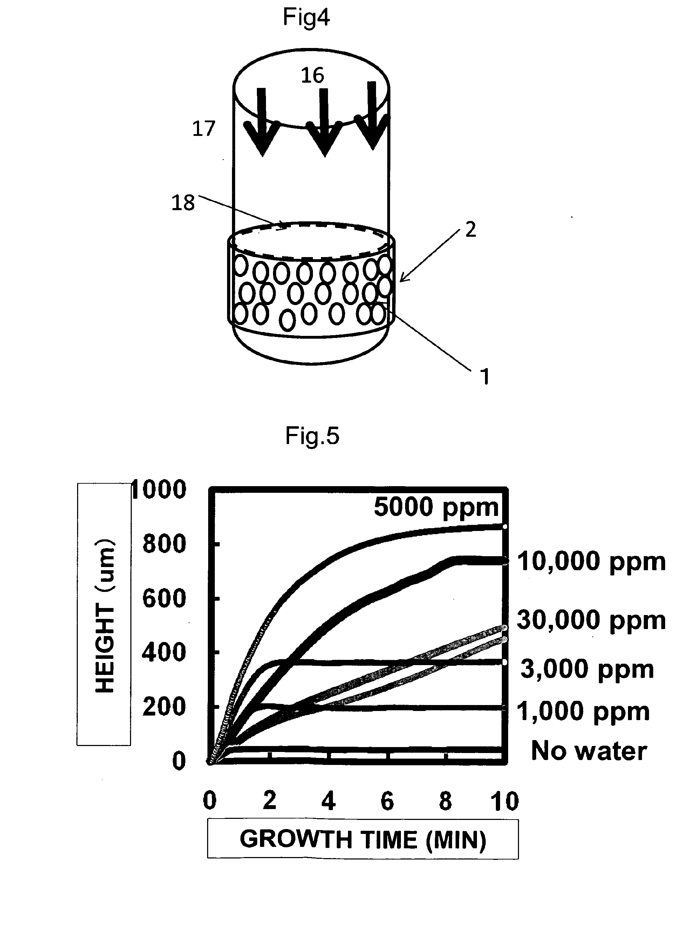

Fig. 4 represents an example in which granular material is used as the base 1, and the plurality of granules are disposed in a cylinder. The feedstock gas channel 17 substantially vertically crosses a columnar catalyst layer 2 containing the cylinder, and the cross sectional area of the feedstock gas channel 17 generally coincides with the area 18 where the feedstock gas channel 17 and the catalyst layer 2 cross.

When the catalyst layer 2 represents a space, the surface of the catalyst layer 2 is defined as the contact surface between the feedstock gas channel 17 and the catalyst layer 2, and the area of this surface is defined as the area of the catalyst layer 2.

With the feedstock gas channel 17, the base 1, and the catalyst layer 2 disposed in this fashion, most of the carbon contained in the feedstock gas can contact the catalyst layer 2, and CNTs can be efficiency produced at high speed.

When there is a 20% difference between the area 18 where the catalyst layer 2 and the feedstock gas channel 17 cross, the cross sectional area of the feedstock gas channel 17, and the area of the catalyst layer 2, 20% or greater of the feedstock gas or the catalyst is wasted, and efficient CNT production becomes difficult.

Known CVD techniques can be used for the production of the single-walled CNT assembly according to the present invention. Specifically, the catalyst layer is produced on the base 1, and a plurality of CNTs is formed on the catalyst layer by chemical vapor deposition (CVD).

Referring to Fig. 1, the base 1 (for example, silicon wafer) provided beforehand with the catalyst layer 2 (for example, an alumina-iron thin film) in a separate step is placed on the base holder 8 inside the synthesis furnace 3 charged with an atmosphere gas (for example, helium) supplied through the gas supply pipe 4.

Here, the base 1 is arranged in such a manner that the surface of the catalyst layer 2 and the feedstock gas and catalyst-activating substance channel generally cross vertically, in order that the feedstock gas and the catalyst-activating substance are efficiently supplied to the catalyst.

Further, the base 1 is disposed in the heating region 7 to make the evacuation volume smaller than the heat volume, in order that the feedstock gas and catalyst-activating substance that contacted the catalyst layer 2 can quickly evacuate.

Then, a formation step is performed in which inside the synthesis furnace 3 is heated to a predetermined temperature (for example, 750°C) while supplying a reducing gas (for example, hydrogen) into the synthesis furnace 3 through the gas supply pipe 4, and in which the heated state is maintained for a desired time period.

The reducing gas reduces or particulates the catalyst layer 2, adjusting the catalyst layer 2 to a preferred state as the CNT catalyst. In the formation step, the catalyst-activating substance may be added, as required.

Here, catalyst particles with a diameter of several nanometers, for example, 1 to 10 nanometers can be adjusted to have a number density of $1 \times 10^{10}$ (particles/cm$^2$) to $5 \times 10^{13}$ (particles/cm$^2$) by selecting an appropriate thickness and appropriate reduction reaction conditions for the catalyst layer 2. This number density is preferred for growing a plurality of CNTs aligned orthogonal to the catalyst layer 2. In the formation step, the catalyst-activating substance may be added, as required.

Thereafter, the carbon weight flux adjusting means 15 is used to stop or reduce the supply of the reducing gas and the atmosphere gas through the gas supply pipe 4 as needed (according to reaction conditions), while supplying the feedstock gas (for example, ethylene), the atmosphere gas, and the catalyst-activating substance (for example, carbon dioxide) through the gas supply pipe 4. These gases supplied through the gas supply pipe 4 form gas flows of multiple directions substantially parallel to the surface of the base 1, and are blown onto the surface of the catalyst layer 2 on the base 1 through the blow holes in substantially uniform amounts from substantially vertical directions to the surface of the base 1. Here, the catalyst particles basically remain adhered to the catalyst layer 2, and, in order to maintain further CNT growth, it is required that the feedstock gas and catalyst-activating substance efficiently diffuse in the grown, aligned CNT assembly, and be continuously and stably supplied to the reduced catalyst layer and/or to the catalyst particles on the catalyst layer 2. To this end, it is preferred that the gases be blown onto the surface of the catalyst layer 2 on the base 1 through the blow holes in substantially uniform amounts from substantially vertical directions to the surface of the base 1.

The gases contact the surface of the catalyst layer 2 in amounts optimized by the carbon weight flux adjusting means 15, and CNTs efficiently grow at high speed and with high yield from the reduced catalyst layer and/or the catalyst particles adhered to the base 1 (growth step). Further, after having contacted the catalyst layer 2, the gases quickly evacuate through the gas exhaust pipes 5, and the generation of carbon impurities is kept at minimum.

In order to suppress remaining materials such as the feedstock gas, catalyst-activating substance, and the decomposed products thereof inside the synthesis furnace 3, and the carbon impurities present inside the synthesis furnace 3 from adhering to the CNT assembly, only the atmosphere gas is flown after the CNT production to suppress the impurities from contacting the CNT assembly (carbon impurity adhesion suppressing step).

The plurality of CNTs simultaneously grown from the catalyst layer 2 on the base 1 grows orthogonally from the catalyst layer 2, and aligns themselves to form a CNT assembly of a substantially uniform height having a high specific surface area.

The following describes each condition.

[Formation Step]

The formation step is the step of creating a reducing gas environment around the catalyst supported on the base 1, and heating at least one of the catalyst and the reducing gas. After this step, the catalyst is reduced, formation of catalyst particles suited for CNT growth is promoted, and/or catalyst activity is improved. For example, when the catalyst is an alumina-iron thin film, the iron catalyst layer is reduced and/or particulated, and large numbers of nanosized catalyst particles are formed on the alumina layer.

[Growth Step]

The growth step is the step of creating a feedstock gas environment around the catalyst, and heating at least one of the catalyst, the feedstock gas, and the catalyst-activating substance to grow CNTs on the catalyst surface. For CNT assembly production, the growth step is preferably performed after the formation step.

[Carbon Impurity Adhesion Suppressing Step]

The carbon impurity adhesion suppressing step is the step of suppressing remaining materials such as the feedstock gas, the catalyst-activating substance, and the decomposed products thereof inside the synthesis furnace 3, and the carbon impurities present inside the synthesis furnace 3 from adhering to the CNT assembly after the CNT production. The step may be performed in any manner, as long as it provides the intended effect. As an example of the carbon impurity adhesion suppressing step, the atmosphere gas may be flown for a certain time period, or the base 1 may be transferred to a region free of remaining materials such as the feedstock gas, the catalyst-activating substance, and the decomposed products thereof, or the carbon impurities inside the synthesis furnace 3 after the CNT production.

Preferably, the base 1 is transferred towards the upstream of the synthesis furnace 3, instead of the downstream where there are large amounts of carbon impurities.

CNT production under high carbon environment generates the feedstock gas and carbon impurities in larger amounts than in the conventional technique inside the synthesis furnace 3, particularly around the base 1 and downstream of the synthesis furnace 3. Because the CNT assembly has an extremely large specific surface area, the presence of the feedstock gas, carbon impurities, and other such materials around the base 1 after the CNT production causes these materials to adhere to the CNT assembly in the form of carbon impurities, and greatly lowers the specific surface area. Thus, suppressing the impurities from contacting the CNT assembly in the carbon impurity adhesion suppressing step after the CNT production is highly effective in obtaining a CNT assembly of a high specific surface area.

[Cooling Step]

The cooling step is the step of cooling the CNT assembly, the catalyst, and the base after the growth step. Because the CNT assembly, the catalyst, and the base 1 are in the high-temperature state after the growth step, these materials may be oxidized when placed in an oxygen-containing environment. In order to prevent this, the CNT assembly, the catalyst, and the base 1 are cooled to preferably 400°C or less, more preferably 200°C or less in a cooling gas environment. The cooling gas is preferably an inert gas, particularly nitrogen in terms of safety, economy, and purging.

[Base (Substrate)]

The base 1 (substrate) is a member capable of supporting the catalyst on which the CNTs are grown. Any member may be appropriately used, as long as it can maintain its shape even under high temperatures of 400°C and higher. Preferably, the base 1 has a form of a flat plate when the gas flow forming means 9 is used. Further, for example, the base 1 may have a form of a thin film or a block, or may be powdery or linear. From the standpoint of producing the CNT assembly in large quantities, forms that provide a large surface area per volume are particularly preferred.

Granular materials (beads) or linear materials (wires) are particularly preferred, because these are easy to handle, and can be used to easily apply the catalyst uniformly. Further, these materials are preferred as the base 1 because of their large surface areas per volume. Use of a laminate of granular materials (beads) and linear materials (wires) as the base 1 is preferred from the standpoint of producing the CNT assembly in large quantities. When such a laminate is used as the base 1, the catalyst-activating substance and the feedstock gas may contact the catalyst and the base 1 more than once. The form of the laminate is preferably a flat plate when the gas flow forming means 19 is used.

Macroscopically, the base 1 may be flat particles (for example, flake- or disc-shaped), long narrow particles (for example, column-shaped, and rod- or ribbon-shaped), or a laminate of these. Specific examples include plate-like alumina, a quartz flake, a quartz fiber, a ceramic fiber, and fibrous titanium oxide. The form of the laminate is preferably a flat plate when the gas flow forming means 19 is used.

Examples of the materials that have been actually used for CNT production include: metals such as iron, nickel, chromium, molybdenum, tungsten, titanium, aluminum, manganese, cobalt, copper, silver, gold, platinum, niobium, tantalum, lead, zinc, gallium, indium, germanium, arsenic, phosphorus, and antimony, and alloys and oxides containing these metals; nonmetals such as silicon, quartz, magnesia, spinel, calcia, dolomite, chromia, zirconia, titania, mullite, glass, mica, graphite, alumina, magnesium oxide, potassium titanate, zirconium oxide, zeolite, silica, titanium oxide, and diamond; ceramics; and mixtures of these.

The metals are less expensive, and are therefore more preferred over silicon and ceramics. Particularly preferred examples for the present invention include iron-chromium (Fe-Cr) alloy, iron-nickel (Fe-Ni) alloy, and iron-chromium-nickel (Fe-Cr-Ni) alloy.

The size of the granular or linear material used as the base 1 is not particularly limited. However, because production of a CNT assembly of a height far greater than the average diameter of the base 1 is not easy, the average diameter of the base 1, specifically of the granular or linear material is from 10 $\mu$m to 1 cm, more preferably from 20 $\mu$m to 5,000 mm, further preferably from 50 $\mu$m to 3,000 mm.

When a granular or linear material having this range of average diameter is used as the base 1, a CNT assembly having a height of at least several ten micrometers can be produced. On the other hand, an average diameter of the base 1 less than 10 $\mu$m makes it difficult to produce a CNT assembly having a height of several ten micrometers or more. When the base 1 has an average diameter of 20 $\mu$m or less and/or 3,000 mm or more, it is difficult to produce the CNT assembly over the whole laminate. Further, with an average diameter of the base 1 exceeding 1 cm, it is difficult to uniformly supply the feedstock gas and catalyst-activating substance over the whole surface of the base 1 when the feedstock gas and catalyst-activating substance are supplied with the gas flow forming means 19 or the like. This makes the CNT assembly production difficult.

[Catalyst]

In the present invention, any catalyst that has actually been used for CNT production may be appropriately used as the catalyst supported on the base or forming the catalyst layer 2, for example, such as a catalyst film. Specific examples include iron, nickel, cobalt, molybdenum, and chlorides and alloys of these. Further, these may be combined with or overlaid on aluminum, alumina, titania, titanium nitride, or silicon oxide. Particularly preferred examples include an iron-molybdenum thin film, an alumina-iron thin film, an alumina-cobalt thin film, an alumina-iron-molybdenum thin film, an aluminum-iron thin film, and an aluminum-iron-molybdenum thin film.

In the present invention, the catalyst may be present in any range that has actually been used for CNT production. For example, when an iron or nickel metallic thin film is used, the thickness is preferably 0.1 nm to 100 nm, more preferably 0.5 nm to 5 nm, and particularly preferably 0.8 nm to 2 nm for obtaining a CNT assembly of a high specific surface area.

[Catalyst Forming Method]

The catalyst layer 2 may be formed on the surface of the base 1 by using either a wet process or a dry process. Specifically, methods such as a sputter vapor deposition method, and a method that applies and calcines metal particles dispersed in an appropriate solvent may be used.

[Reducing Gas]

The reducing gas used in the formation step is a gas that is effective in at least one of the following. Reduction of the catalyst, promotion of the catalyst particle formation suited for CNT growth, and improvement of catalyst activity. The reducing gas used in the present invention may be appropriately selected from reducing gases that have actually been used for CNT production. For example, hydrogen, ammonia, water, and a mixed gas of these may be used.

[Inert Gas (Atmosphere Gas)]

In the present invention, the atmosphere gas (carrier gas) for the chemical vapor deposition may be appropriately selected from those actually used for CNT production, as long as it is inert at the CNT growth temperature and does not react with the growing CNTs. Generally, inert gas is preferred. Examples include helium, argon, hydrogen, nitrogen, neon, krypton, carbon dioxide, chlorine, and a mixed gas of these. Nitrogen, helium, argon, hydrogen, and a mixed gas of these are particularly preferred.

[Feedstock (Feedstock Gas)]

In the present invention, the feedstock used for the CNT production may be appropriately selected from substances actually used for CNT production and that contain the feedstock carbon element but does not contain an oxygen element at the growth temperature. It is known that oxygen-containing compounds such as ethanol and carbon monoxide can be used as the feedstock gas to produce CNTs. Generally, CNT production using ethanol, carbon monoxide, or other such compounds as the feedstock gas is far inferior to the producing method of the present invention in terms of, for example, growth rate and synthesis efficiency. The effects of the present invention cannot be obtained when such an oxygen-containing feedstock gas is used, because it greatly lowers the effect of the catalyst-activating substance. In the present invention, ethanol or carbon monoxide is used not as the feedstock gas, but as the catalyst-activating substance.

Examples of the feedstock gas include gaseous carbon compounds such as aromatic compounds, saturated hydrocarbons, unsaturated hydrocarbons, unsaturated cyclic hydrocarbons, saturated cyclic hydrocarbons, cyclic unsaturated hydrocarbons, and cyclic saturated hydrocarbons. Hydrocarbons such as methane, ethane, propane, butane, pentane, hexane, heptane, propylene, ethylene, butadiene, polyacetylene, and acetylene are particularly preferred. CNTs occur on the catalyst surface as a result of the feedstock gas contacting the catalyst in the growth step.

[Atmosphere Pressure]

The pressure of the CNT growing atmosphere is preferably from $10^4$ Pa to $10^6$ Pa (100 atm), more preferably from $5 \times 10^4$ Pa to $2 \times 10^5$ Pa (2 atmospheric pressure), particularly preferably from $9 \times 10^4$ Pa to $1.1 \times 10^5$ Pa. CNT production efficiency is very desirable under atmospheric pressure or pressure close to atmospheric pressure over the range of from $9 \times 10^4$ Pa to $1.1 \times 10^5$ Pa, outside a vacuum or a high pressure. This pressure range is also preferred in terms of mass production, because it allows the use of a producing apparatus of an open system that does not use a shutter or a valve.

[Addition of Catalyst-Activating Substance]

The catalyst-activating substance may be added in the CNT growth step. Adding the catalyst-activating substance extends the lifetime of the catalyst and improves the catalyst activity, and can thus improve the CNT production efficiency and the purity of CNTs.

The catalyst-activating substance used is an oxidative substance such as oxygen and sulfur, and does not cause serious damage to CNTs at growth temperature. Effective examples include water; oxygen; ozone; acidic gas; oxygen-containing compounds such as nitrogen oxide, and low-carbon oxygen-containing compounds such as carbon monoxide and carbon dioxide; alcohols such as ethanol, methanol, and isopropanol; ethers such as tetrahydrofuran; ketones such as acetone; aldehydes; acids; salts; amides; esters, and mixtures of these. Of these, water, oxygen, carbon dioxide, carbon monoxide, ethers, and alcohols are preferred. Water is particularly preferred for easy availability.

When the catalyst-activating substance is a carbon-containing substance, the carbon in the catalyst-activating substance can be a feedstock for CNTs.

When producing CNTs using the catalyst-activating substance and feedstock in the growth step, it is important for efficient CNT production that (1) the feedstock contains carbon but does not contain oxygen, and (2) the catalyst-activating substance contains oxygen.

[Catalyst-Activating Substance Supply Amount]

There is an optimum value for the amount of the catalyst-activating substance added. Specifically, the excess amount of catalyst-activating substance lowers the growth efficiency, while catalyst-activating substance does not exhibit effects when added in deficient amounts. One of the most important factors for improving CNT production efficiency is the ratio of the number concentration of the carbon atoms contained in the feedstock to the number concentration of the oxygen contained in the catalyst-activating substance. The optimum ratio of carbon atom number concentration and oxygen atom number concentration varies depending on the temperature of the growth step, the types of the catalyst-activating substance and feedstock used, and the type of the catalyst. Typically, the ratio is preferably from 0.5 to 2,000 in terms of the ratio of the number concentration of the carbon atoms contained in the feedstock gas introduced to the synthesis furnace and the number concentration of the oxygen atoms contained in the catalyst-activating substance.

The ratio of the number concentration of the carbon atoms contained in the feedstock gas and the number concentration of the oxygen atoms contained in the catalyst-activating substance can be calculated ad follows.

$$\{(\text{concentration of introduced feedstock gas}) \times (\text{number of carbon contained in the feedstock gas})\}/\{(\text{concentration of introduced catalyst-activating substance}) \times (\text{number of oxygen contained in the catalyst-activating substance})\}.$$

As used herein, the concentrations of the introduced feedstock gas and catalyst-activating substance refer to the proportions of the flow amounts of the feedstock gas and the catalyst-activating substance in the total flow amount of the gases supplied into the synthesis furnace through the supply pipe and that come into contact with the catalyst.

When the ratio of the carbon atom number concentration and the oxygen atom number concentration is less than 0.5, the excess oxygen lowers the catalyst activity, and inhibits CNT production. On the other hand, when the ratio of the carbon atom number concentration and the oxygen atom number concentration is 2,000 or more, the catalyst-activating substance cannot sufficiently exhibit effects due to the oxygen deficiency. Efficient CNT production is possible, and a CNT assembly of a large height dimension and a high specific surface area can be efficiently produced when the ratio of the carbon atom number concentration and the oxygen atom number concentration falls within a range of from 0.5 to 2,000.

In the conventional technique that uses water as the catalyst-activating substance and ethylene as the feedstock gas, the optimum water content for ethylene is extremely small. For example, in the case of Non-Patent Document 1, the optimum ratio of the number concentration of the carbon atoms contained in ethylene and the number concentration of the oxygen atoms contained in water is about 1,500.

[Mechanism of the Present Invention]

The CNT assembly growth using such a trace amount of catalyst-activating substance involves difficulties in stably supplying water to the catalyst in an optimum amount. For example, when the carbon impurities generated by decomposition of the feedstock gas adhere to the synthesis furnace, the carbon impurities react with water, and consume a very trace amount of water. This makes it difficult to stably supply an optimum amount of water to the catalyst. Carbon impurity amounts vary with the number of synthesis runs, and accordingly the amount of water supplied to the catalyst is different in each synthesis. It is therefore difficult to continuously and stably produce a CNT assembly.

Further, when a laminated base prepared as a laminate of granular or linear materials and that has a large surface area per volume is used to produce a CNT assembly of a high specific surface area in large quantity, the catalyst-activating substance contacts the catalyst and the base more than once. Because the catalyst-activating substance is consumed every time it comes into contact with the catalyst and the base, it becomes very difficult to supply the catalyst-activating substance over the whole laminate in a uniform, optimum amount.

The present inventors found that efficient CNT production is possible with a combination of feedstock and catalyst-activating substance other than the combination of ethylene as the feedstock gas and water as the catalyst-activating substance, provided that (1) the feedstock contains carbon but does not contain oxygen, and (2) the catalyst-activating substance contains oxygen. It was also found that the ratio of carbon atom number concentration and oxygen atom number concentration can be made smaller, and continuous, stable, and efficient CNT assembly production is possible when a catalyst-activating substance (for example, carbon dioxide) less efficient than water is used as the catalyst-activating substance, and/or when a feedstock gas (for example, acetylene) more efficient than ethylene is used as the feedstock gas. It was also found that a CNT assembly of a high specific surface area can be efficiently produced over the whole laminate of granular or linear materials.

The mechanism of the present invention by which the combination of the feedstock gas and the catalyst-activating substance with a small ratio of carbon atom number concentration and oxygen atom number concentration enables a continuous and uniform CNT assembly synthesis can be explained as follows.

Specifically, because the catalyst-activating substance is supplied in high concentration, there are always sufficient amounts of catalyst-activating substance even when the catalyst-activating substance is slightly consumed in contact with other materials such as the carbon impurities and the base. The catalyst-activating substance can thus be supplied to the catalyst both stably and uniformly in a near optimum amount. This enables stable and uniform growth of a single-walled CNT assembly.

In the same reasoning, because the catalyst-activating substance is supplied in high concentration, there are always sufficient amounts of catalyst-activating substance even when the catalyst-activating substance is consumed in contact with the catalyst. The catalyst-activating substance can thus be stably and uniformly supplied to the catalyst in a near optimum amount, and a CNT assembly of a high specific surface area can be produced over the whole laminated base.

In this manner, the catalyst-activating substance can be supplied to the catalyst in an optimum amount at all times, and a CNT assembly of a high specific surface area can be stably synthesized by using a low-efficient catalyst-activating substance to increase the optimum concentration of the catalyst-activating substance, and/or by using a high-efficient feedstock gas to lower the optimum concentration of the feedstock gas. Specifically, the ratio of carbon atom number concentration and oxygen atom number concentration is lowered more than in the conventional technique (about 1,500 in the case of Non-Patent Document 1).

The low-efficient catalyst-activating substance does not sufficiently develop the catalyst activity improving effect and the lifetime extending effect unless added in a higher concentration than that for a more efficient catalyst-activating substance. Thus, in order to optimally supply the catalyst-activating substance, the oxygen atom number concentration inside the synthesis furnace needs to be increased.

The low-efficient catalyst-activating substance should be a substance less oxidative than water. Examples include carbon dioxide, acetone, tetrahydrofuran, and ethanol. The high-efficient catalyst-activating substance may be, for example, water.

The preferred range of carbon atom number concentration and oxygen atom number concentration for obtaining the effects of the present invention is 0.2 to 300, more preferably 0.3 to 250, further preferably 0.5 to 200, even more preferably 1 to 100.

These ranges of a carbon atom number concentration-to-oxygen atom number concentration ratio are preferable for stable and uniform growth of a single-walled CNT assembly, because the catalyst-activating substance remains in sufficient amounts even when slightly consumed in contact with other materials such as the carbon impurities, the base, and the catalyst, and can thus be stably and uniformly supplied to the catalyst in a near optimum amount.

[Reaction Temperature]

The CNT growth reaction temperature is appropriately decided taking into consideration factors such as the metal catalyst, the feedstock carbon source, and the reaction pressure. However, when the step of adding a catalyst activator is included to eliminate by-products that cause catalyst deactivation, the reaction temperature is desirably set in a temperature range in which the catalyst activator can sufficiently develop its effect.

Specifically, the optimum temperature range is one in which the lower limit is the temperature that enables the catalyst-activating substance to remove by-products such as amorphous carbon and graphite, and in which the upper limit is the temperature at which the catalyst-activating substance does not oxidize the main product CNT.

Specifically, the reaction temperature is preferably 400°C to 1,000°C when water is used as the catalyst-activating substance. Less than 400°C, the catalyst-activating substance does not exhibit effects. Above 1,000°C, the catalyst-activating substance reacts with the CNT.

The reaction temperature is preferably 400°C to 1,100°C when carbon dioxide is used as the catalyst-activating substance. Less than 400°C, the catalyst-activating substance does not exhibit effects. Above 1,100°C, the catalyst-activating substance reacts with the CNT.

[High-Carbon-Concentration Environment]

The CNT growth rate is proportional to the number of the carbon atoms contained in the feedstock gas that comes into contact with the catalyst. That is, the growth rate increases as the proportion of the feedstock gas (feedstock concentration) with respect to the total flow amount increases, and the CNT production efficiency improves.

On the other hand, in the CNT production using the conventional synthesis technique that uses only the feedstock gas without the catalyst-activating substance, the carbon-based impurities that generate in the CNT growth step increase as the carbon concentration (feedstock concentration) becomes higher. Because the carbon-based impurities cover the catalyst particles and deactivate the catalyst, the conventional technique produces CNTs in a growth atmosphere (low carbon concentration environment) with an about 0.1 to 1 % feedstock proportion with respect to the total flow amount. Accordingly, it has not been possible to improve the CNT production efficiency as intended.

In the producing method of the present invention adding the catalyst-activating substance, the catalytic activity greatly improves in the presence of the catalyst-activating substance, and CNTs can be grown for extended time periods, because the catalyst does not lose activity even in a feedstock concentration (high-carbon-concentration environment) with a feedstock gas proportion of about 2% to 20%, in excess of 1 % with respect to the total flow amount. The CNT growth rate greatly improves under such a high-carbon-concentration environment, making it a preferred environment for producing a high-purity carbon nanotube assembly of a high specific surface area.

Specifically, adding the catalyst-activating substance has made it possible, for the first time, to efficiently produce high-purity CNTs, particularly a CNT assembly of single-walled CNTs of a high specific surface area under a high-carbon-concentration environment.

[CNT Assembly]

With CNT producing apparatus and method described above, CNTs can be efficiently produced from the catalyst on the base using the feedstock gas, in a high-carbon-environment, catalyst activating substance-containing atmosphere. The large numbers of CNTs grown from the catalyst align in a specific direction and form a CNT assembly.

Preferably, the CNT assembly by the present invention has a low weight density of 0.002 $g/cm^3$ to 0.2 $g/cm^3$. The weight density is controlled by adjusting the formation step conditions, and the number density of the catalyst particles of the catalyst layer. The CNT assembly in this density range forms a plurality of bundles each made up of several to several ten single-walled CNTs grown from the catalyst particles on the base, and grows along the direction normal to the base surface. This enables materials such as the feedstock gas and the catalyst-activating substance to easily diffuse between the CNTs, and easily contact the catalyst layer on the base, making it possible to produce a CNT assembly in large quantity from the catalyst layer.

Further, the CNT assembly according to the present invention has an excellent characteristic of high specific surface area, because of the suppressed generation and adhesion of the carbon impurities.

Adhesion of the carbon impurities to the single-walled CNT assembly reduces the specific surface area of the single-walled CNT assembly. Because of the suppressed generation and adhesion of the carbon impurities, the single-walled CNT assembly according to the present invention has a very large specific surface area of 800 $m^2/g$ to 2,600 $m^2/g$. The specific surface area of the CNT assembly can be determined by adsorption-desorption isotherm measurement with liquid nitrogen at 77 K. The large specific surface area makes the CNT assembly effective as a catalyst support or an energy and substance storage material, and is preferable for applications such as in supercapacitors and actuators.

An unopened CNT assembly with a specific surface area of less than 800 $m^2/g$, or an opened CNT assembly with a specific surface area of less than 1,300 $m^2/g$ possibly contains carbon impurities in several ten percent (about 40%) of the weight. This makes it difficult to develop the original CNT functions.

Desirably, the CNTs have as high a purity as possible to obtain a large specific surface area. As used herein, purity means carbon purity. Carbon purity represents the percentage of the carbon in the weight of the CNT assembly, and can be determined by methods such as an elemental analysis using X-ray fluorescence. There is no upper limit in carbon purity for obtaining a large specific surface area. However, for reasons related to production, it is difficult to obtain a CNT assembly with a carbon purity of 99.9999% or more. A carbon purity less than 95% makes it difficult to obtain a specific surface area above 800 $m^2$/g in unopened CNTs.

[Orientation]

The orientation of the single-walled CNT assembly can be evaluated based on, for example, Herman's orientation factor.
For example, a CNT assembly with a Herman's orientation factor of greater than 0.1 and less than 1 as calculated by using the X-ray diffraction intensity obtained by the θ-2θ method or Laue method, or using an intensity profile obtained from an FFT image obtained by the fast Fourier transformation (FFT transformation) of an SEM image or an atomic force microscope (hereinafter, also referred to as "AFM") image is preferred in a variety of applications, because such CNT assemblies have desirable electrical characteristics, desirable mechanical characteristics, and desirable heat characteristics, in addition to having thermodynamic, electric, and mechanical anisotropy.

The alignment direction is the average of the directional vectors of the individual single-walled CNTs forming the single-walled CNT assembly. Accordingly, the alignment direction may vary depending on the location of the single-walled CNT assembly, and the size of the region where orientation is evaluated. For quantitative determination of alignment direction, an FFT image should be used that is obtained by the fast Fourier transformation of, for example, an SEM image of the single-walled CNT assembly. The FFT image of the oriented single-walled CNT assembly appears as a flat ellipsoid, which becomes flatter as the degree of orientation increases. The long axis direction of the ellipsoid is the direction in which the orientational periodicity of the single-walled CNTs becomes maximum, and the short axis direction of the ellipsoid represents the alignment direction in the field of the original image of the FFT image. The reference direction for the calculation of the Herman's orientation factor is the long axis direction of the ellipsoid.

The CNT assembly alignment can be evaluated by using at least one of the following methods.

1. In the measurement of X-ray diffraction intensity (θ-2θ method) with the incident X-rays from the first direction parallel to the CNT longitudinal direction and from the second direction orthogonal to the first direction, there exist a θ angle and reflection azimuth at which the reflection intensity from the second direction exceeds the reflection intensity from the first direction, and a θ angle and reflection azimuth at which the reflection intensity from the first direction exceeds the reflection intensity from the second direction.

2. A diffraction peak pattern indicative of the presence of anisotropy appears in the measurement of X-ray diffraction intensity (Laue method) in a two-dimensional diffraction pattern image obtained by the incident X-rays from a direction orthogonal to the CNT longitudinal direction.

3. Herman's orientation factor is greater than 0.1 and less than 1, more preferably 0.25 or greater and less than 1 in the X-ray diffraction intensity obtained by the θ-2θ method or Laue method.

[Examples]

The following describes the single-walled CNT assembly producing method of the present invention in more detail based on specific Examples. The present invention, however, is not limited by the following Examples.

[Example 1]

A CNT assembly was produced by using the CNT producing apparatus shown in Fig. 1, and a method similar to the CNT producing method described in the Best Mode. Descriptions will be given with reference to Fig. 1.

A quartz tube (inner diameter, 80 mm) such as a cylinder was used as the vertical synthesis furnace 3. The heating means 6 and the heating region 7 had a length of 260 mm.

A base holder 8 made of quartz was provided 50 mm downstream from a horizontal position at the center of the heating region 7. The base holder 8 was horizontally installed to allow a flat base 1 to be placed thereon.

A gas supply pipe 4 made of a heat-resistant alloy and having a diameter of 22 mm (inner diameter, 20 mm) was provided through the upper wall of the synthesis furnace 3 by being vertically inserted through an opening provided through the upper wall of the synthesis furnace 3. The gas exhaust pipes 5 were provided through the bottom wall by being vertically inserted through openings provided through the bottom wall of the synthesis furnace 3. Heating means 6 realized by a resistance heating coil was provided around the synthesis furnace 3 along with the heating means 6 and the heat temperature adjusting means.

Gas flow forming means 9 realized by the heat-resistant alloy Inconel 600 of a cylindrical flat hollow structure with a diameter of 60 mm was connected to the gas supply pipe 4 in communication with an end portion thereof inside the synthesis furnace 3. The gas supply pipe 4 was connected to the center of the gas flow forming means 9 in communication therewith.

The gas flow forming means 9 was arranged within the same plane substantially parallel to the surface of the base 1, with the center of the base 1 coinciding with the center of the gas flow forming means 9. The gas flow forming means 9 was provided with gas blowing means 10 realized by a plurality of blow holes having a pore size of 0.5 mm. The gas flow forming means 9 is columnar in shape with a hollow structure, and had a surface size of, for example, 60.0 mm × 16.7 mm. The diameter of the gas blowing means was 0.5 mm, and a total 82 gas blowing means were provided.

The blow holes of the gas blowing means 10 were provided over the catalyst layer 2 on the base 1, and the feedstock gas and catalyst-activating substance were ejected onto the catalyst substantially vertically to the surface of the base 1. As used herein, "over the catalyst layer 2" refers to a position where the ejection axis lines of the blow holes create an angle of 0° or more and less than 90° with a normal line of the base 1. The distance between the gas blowing means 10 and the opposing catalyst surface was 20 mm.

The feedstock gas and catalyst-activating substance supplied into the synthesis furnace 3 at one location through the gas supply pipe 4 are diffused and distributed, and form feedstock gas flows and catalyst-activating substance flows in all directions over the 360° angle on a plane substantially parallel to the surface of the base 1. The feedstock gas and catalyst-activating substance then contact the surface of the catalyst layer 2 on the base 1 substantially vertically to the surface of the base 1. After contacting the catalyst, the feedstock gas and catalyst-activating substance are quickly evacuated outside of the heating region 7 to suppress carbon impurity generation.

The carbon weight flux adjusting means 15 was configured by connecting to the gas flow unit the feedstock gas cylinder 11 that supplies the CNT feedstock carbon compound, and, as required, the catalyst-activating substance cylinder 12, the atmosphere gas cylinder 13 that supplies the carrier gas of the feedstock gas and catalyst-activating substance, and the reducing gas cylinder 14 for reducing the catalyst. These materials were supplied to the gas supply pipe 4 while independently controlling the supply amounts, so as to control the supply amount of the feedstock gas.

The adjustable range of carbon weight flux is 0 $g/cm^2/min$ to 1,000 $g/cm^2/min$ in the configuration of the present apparatus. However, the carbon weight flux can be appropriately adjusted over a wider range with a gas flow unit that has appropriate supply amounts.

As the base 1, a catalyst-sputtered ($Al_2O_3$ 30 nm, Fe 1.8 nm), 40 mm × 40 mm Si base with a 500 nm-thick thermally-oxidized film was used.
The base 1 was installed on the substrate holder 8 installed 50 mm downstream of a horizontal position at the center of the heating region 7 in the synthesis furnace 3 (installing step). The base 1 was horizontally installed. In this way, the catalyst on the base 1 crosses the channel of the feedstock gas and catalyst-activating substance substantially vertically to enable the feedstock gas and catalyst-activating substance to be efficiently supplied to the catalyst.

While introducing a mixed gas of He: 200 sccm and $H_2$: 1,800 sccm as the reducing gas (total flow rate: 2,000 sccm), the temperature inside the synthesis furnace 3 at the furnace pressure of $1.02 \times 10^5$ Pa was raised from room temperature to 810°C in 15 min using the heating means 6, and the base 1 with the catalyst was also heated for 3 min at the maintained temperature of 810°C (formation step). As a result, the iron catalyst layer was reduced, and formation of particles suited for single-walled CNT growth was promoted, forming large numbers of nanosized catalyst particles on the alumina layer.

The number density of the catalyst particles can be estimated by counting the number of particles observed in a scanning electron micrograph magnified at least 100,000 times. The measured number density of the catalyst was 5 × $10^{11}/cm^2$.

Then, with the synthesis furnace temperature set to 810°C at a furnace pressure of 1.02E+5 Pa, atmosphere gas He: 1,840 sccm, feedstock gas acetylene: 15 sccm (150 sccm of acetylene diluted with 10% helium), catalyst-activating substance carbon dioxide: 10 sccm were supplied for 10 min at a total flow rate of 2,000 sccm (growth step). Here, the ratio of the number concentration of the carbon atoms contained in the feedstock gas to the number concentration of the oxygen atoms contained in the catalyst-activating substance is 3. The amount of introduced carbon dioxide (oxygen atom number concentration) was adjusted in advance to maximize the yield of the CNT assembly with respect to the acetylene amount (introduction of an optimum carbon dioxide amount).

Specifically, the optimum amount was determined as follows. The height during the growth of a CNT assembly synthesized with different introduced amounts of carbon dioxide was determined using the telecentric measurement system described in JP-A-2009-208976 (Application No. 2008-051321). As represented in Fig. 5, it can be seen from the growth curve of the measured height that the height (yield) of the CNT assembly increases with increase in the introduced amount of carbon dioxide, reaches the maximum at 5,000 PPM, and eventually decreases with increase in carbon dioxide. That is, the optimum amount of introduced carbon dioxide is 5,000 PPM under the present experiment conditions. Because the introduced amount of the feedstock gas acetylene is 7,500 PPM, the ratio of the carbon atom number concentration to the number concentration of the oxygen atoms contained in the catalyst-activating substance is 3 (acetylene molecule contains two carbon atoms).

Further, it can be seen from this experiment that the yield of the CNT assembly decreases with the excess introduction of the catalyst-activating substance. When the introduced amount of carbon dioxide is 30,000 PPM and the ratio of the carbon atom number concentration to the number concentration of the oxygen atoms contained in the catalyst-activating substance is 0.5, the yield of the CNT assembly is about a half of the maximum value, and this is the limit for desirably producing the CNT assembly. Further introduction of the carbon dioxide only lowered the yield, and the CNT assembly could not be desirably produced.

After the foregoing procedures, single-walled CNTs grew from the reduced catalyst layer or from each catalyst particle (growth step), and an aligned single-walled CNT assembly was obtained. The CNTs were grown on the base 1 in this manner in the catalyst-activating substance-containing, high-carbon environment.

After the growth step, only the atmosphere gas was supplied for 3 min (total flow rate of 4,000 sccm) to eliminate the remaining feedstock gas, the generated carbon impurities, and the catalyst activator (carbon impurity adhesion suppressing step).

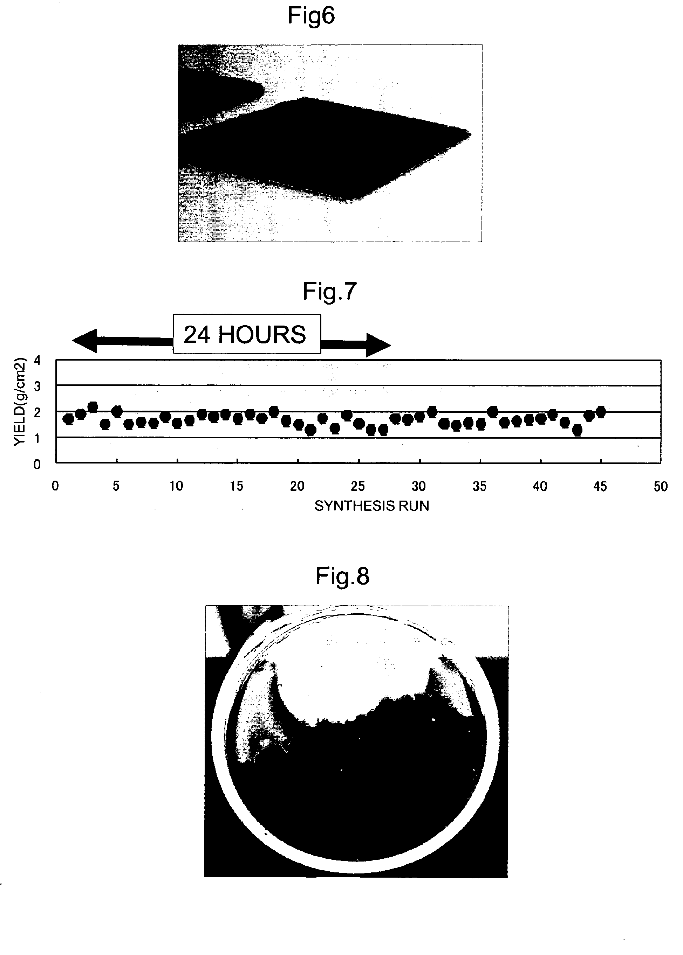

Thereafter, the substrate was cooled to 400°C or less, and the base 1 was taken out of the synthesis furnace 3 (cooling step, base removing step) to finish the series of single-walled CNT assembly producing steps. Fig. 6 shows a digital photograph of the single-walled CNT assembly produced. It can be seen that the CNT assembly is produced in a substantially uniform height over the surface of the catalyst layer 3 on the base 1, and that the producing method of the present invention is effective at efficiently producing a CNT assembly over a large area in a substantially uniform fashion.

CNT assemblies were continuously produced in 45 runs using the foregoing method. The synthesis furnace and other components were not cleaned during the 45 production runs. As represented in Fig. 7, the 45 synthesis runs were stable, and the yields were substantially uniform over the 1.5 mg/cm$^2$ to 2.5 mg/cm$^2$ range. Further, there was no lowering in the specific surface area of the CNT assembly. It can be seen from these results that the producing method of the present invention enables a CNT assembly of a high specific surface area to be continuously and stably produced in a uniform fashion.

[CNT Assembly Production Using Combinations of Feedstock and Catalyst-Activating Substance]

The following specifically describes production of the CNT assembly of the present invention in different combinations of the feedstock and the catalyst-activating substance. CNT assemblies were grown under the same conditions used in Example 1, using the base 1 used in Example 1. The producing steps were performed under the same conditions used Example 1, except that, in the growth step, two substances containing no oxygen (acetylene and ethylene) were used as the feedstocks, and that five oxygen-containing substances (water, isopropanol, acetone, tetrahydrofuran, and ethanol) were used as the catalyst-activating substances aside from water. These materials were used in six different combinations: (ethylene and acetone), (ethylene and tetrahydrofuran), (ethylene and ethanol), (ethylene and isopropanol), (acetylene and water), and (acetylene and tetrahydrofuran). CNT assembly production was possible in all cases.

Prior to the CNT assembly production in six combinations of feedstock gas and catalyst-activating substance, the optimum amount the catalyst-activating substance for the feedstock gas was examined. The optimum amount of catalyst-activating substance that maximizes the yield of the CNT assembly in 10 minutes of synthesis with the base 1 of Example 1 was determined. The optimum amount was 31 for the ethylene-acetone combination, 75 for the ethylene-tetrahydrofuran combination, 107 for the ethylene-ethanol combination, 187 for the ethylene-isopropanol combination, 67 for the acetylene-water combination, and 15 for the acetylene-tetrahydrofuran combination.

The use of the more reactive and more efficient acetylene as the carbon source instead of ethylene can lower the carbon atom number concentration, and can thus stably and uniformly produce the CNT assembly using larger amounts of catalyst-activating substance.

CNT assemblies were continuously produced in 45 runs in the six different combinations in the steps of Example 1. The synthesis furnace and other components were not cleaned during the 45 production runs. The 45 synthesis runs were stable, and the yields were substantially uniform in the all six combinations. Further, there was no lowering in the specific surface area of the CNT assembly. It can be seen from these results that the producing method of the present invention enables a CNT assembly of a high specific surface area to be continuously and stably produced in a uniform fashion.

[Comparative Example 1]

[Continuous Production of CNT Assembly Using Water and Ethylene]

A CNT assembly was produced according to the method of Example1, using ethylene and water as the feedstock gas and the catalyst-activating substance, respectively. The same producing method used in Example 1 was used, except that, in the growth step, atmosphere gas He: total flow rate ratio 84% (1,680 sccm), feedstock gas ethylene: total flow rate ratio 7.5% (150 sccm), water-containing He (catalyst-activating substance; relative humidity 23%): total flow rate ratio 6% (120 sccm) were used in the total flow rate of 2,000 sccm. The water concentration was 400 ppm as calculated from the amount of introduced water. Here, the ratio of the number concentration of the carbon atoms contained in the feedstock gas ethylene to the number concentration of the oxygen atoms contained in the catalyst-activating substance water is 375. The water concentration was 100 ppm as measured with a water concentration meter connected to the exhaust pipe. Based on the measured value, the ratio of the carbon atom number concentration of ethylene to the number concentration of the oxygen atoms contained in water is 1,500. The difference between the number concentration of the water introduced to the synthesis furnace and the water number concentration measured at the exhaust pipe suggests that a very trace amount of water was consumed by reacting with components such as the catalyst, the base, the synthesis furnace upon contact.

The amount of introduced water (oxygen atom number concentration) was adjusted in advance to maximize the yield of the CNT assembly with respect to the ethylene amount (introduction of optimum water).

During the course of the continuous CNT assembly production in 45 runs under these conditions, the synthesis lost stability and the yield lowered after 20 runs. Desirable CNT assembly production was no longer possible after 40 synthesis runs. The synthesis instability and non-uniformity are considered to be due to the increased amounts of carbon impurities adhering to the synthesis furnace 3 and reacting with water as the synthesis continues further, consuming a very trace amount of water, and thus preventing the water from being supplied to the catalyst in an optimum amount.

The carbon dioxide, on the other hand, is supplied into the synthesis furnace 3 in a much higher concentration than that of water. It is therefore considered that only a very small portion of the carbon dioxide reacts with the carbon impurities, and that the carbon dioxide is supplied to the catalyst always in an optimum amount.

The results are summarized in Table 1. "Good" means high-yield, uniform, and stable CNT assembly production, "N/A" means no experiment results, and "Poor" means low-yield, non-uniform, and unstable CNT assembly production, or no CNT assembly growth.

[Table 1]

| Catalyst-activating substance | Ethylene amount added (sccm) | Acetylene amount added (sccm) | Catalyst-activating substance amount added (ppm) | Ratio of carbon atom number concentration to oxygen atom number concentration | CNT synthesis | Stability of assembly continuous synthesis (Yield) | Stability of continuous synthesis (Specific surface area) |
|---|---|---|---|---|---|---|---|
| Acetone | 150 | 0 | 4800 | 31 | Good | Good | Good |
| Tetrahydrofuran | 150 | 0 | 2000 | 75 | Good | Good | Good |
| Ethanol | 150 | 0 | 1400 | 107 | Good | Good | Good |
| Isopropanol | 150 | 0 | 800 | 187 | Good | Good | Good |
| Water | 0 | 15 | 225 | 67 | Good | Good | Good |
| Carbon dioxide | 0 | 15 | 5000 | 3 | Good | Good | Good |
| Tetrahydrofuran | 0 | 15 | 1000 | 15 | Good | Good | Good |
| Water (Comparative Example 1) | 150 | 0 | 120 | 375 | Good | Poor | Poor |

It can be seen that continuous, stable, high-yield CNT assembly production is possible when the ratio of the number concentration of the carbon atoms contained in the feedstock gas to the number concentration of the oxygen atoms contained in the catalyst-activating substance ranges from 3 to 187.

[Example 2]

[No Carbon Impurity Adhesion Suppressing Step]

A CNT assembly was synthesized according to the producing method of Example 1, using the same producing apparatus, base, and catalyst used in Example 1, without performing the carbon impurity adhesion suppressing step. The CNT assembly was immediately taken out of the heating region 7 after the synthesis. The CNT assembly grew, and had a specific surface area of about 900 $m^2/g$.

The yield remained unchanged during the 50 runs of continuous CNT assembly production. However, the specific surface area gradually decreased after 20 runs, and had a value of 800 $m^2/g$ or less after 30 runs.

[Example 3]

[No Gas Flow Forming Means]

In the producing apparatus of Example 1, the feedstock gas was blown onto the catalyst on the base 1 through the gas supply pipe 4 disposed 20 mm above the base 1, without using the gas flow forming means 9. The CNT assembly growth was uneven at the central portion and the peripheral portion of the catalyst layer 2 on the base 1, and the CNT assembly synthesized on the whole surface of the catalyst layer was slightly non-uniform. The yield was 0.4 $mg/cm^2$, and the specific surface area was about 1,100 $m^2/g$. There were no fluctuations both in yield and specific surface area during the continuous production.

[Comparative Example 2]

[CNT Assembly Production Using Only Feedstock Gas]

A CNT assembly was produced using the feedstock gas ethylene and acetylene, without adding the catalyst-activating substance. The producing steps were performed under the same conditions used Example 1, except that the catalyst-activating substance was not added. The acetylene and ethylene were used in 15 sccm and 150 sccm, respectively. It was not possible to produce the CNT assembly with the feedstock alone without the catalyst-activating substance. This is suggestive of the catalyst-activating substance being very important for CNT production.

[Comparative Example 3]

[CNT Assembly Production Using Oxygen-Containing Feedstock Gas (Carbon Monoxide)]

A CNT assembly was produced using the feedstock carbon monoxide, a known feedstock gas for CNT production. Unlike ethylene and acetylene, carbon monoxide contains oxygen. The producing steps were performed under the same conditions used Example 1, except that the CNT assembly was produced in six different combinations of the feedstock gas carbon monoxide and the catalyst-activating substance (water, carbon dioxide, acetone, tetrahydrofuran, ethanol, isopropanol). CNT assembly production was not possible in all cases. This suggests that the absence of oxygen in the feedstock gas is very important for CNT production.

[Comparative Example 4]

[CNT Assembly Production Using Oxygen-Free Catalyst-Activating Substance (Ammoriia)]

Ammonia, a known additive in CNT production, was used as the catalyst-activating substance to produce a CNT assembly. Unlike other catalyst-activating substances, ammonia does not contain oxygen. The producing steps were performed under the same conditions used Example 1, except that the CNT assembly was produced in two combinations of the feedstock gas ethylene and acetylene with the catalyst-activating substance ammonia. CNT assembly production was not possible in either case. This suggests that the presence of oxygen in the catalyst-activating substance is very important for CNT production.

[Comparative Example 5]

[No Formation Step]

A CNT assembly was produced according to the producing method of Example 1 using the same producing apparatus, base 1, and catalyst used in Example 1, without performing the formation step. There was CNT assembly growth, but with a very small yield of 0.1 mg/cm$^2$. Further, because of the low single-walled CNT content, the specific surface area was only about 400 m$^2$/g. The results suggest that the formation step is very important for the efficient production of the CNT assembly of a high specific surface area.

The results are summarized in Table 2. "Good" means high-yield, uniform, and stable CNT assembly production, "N/A" means no experiment results, and "Poor" means low-yield, non-uniform, and unstable CNT assembly production or no CNT assembly growth. "Acceptable" means not as good as "Good", but more desirable CNT assembly production than "Poor" in terms of yield, uniformity, and stability.

[Table 2]

|  | CNT assembly production | CNT specific surface area m$^2$/g | Stability of continuous growth (Yield) | Stability of continuous growth (Specific surface area) |
|---|---|---|---|---|
| Example 1 | Good | 1200 | Good | Good |
| Example 2 (No carbon impurity adhesion suppressing step) | Good | 900 | Good | Acceptable |
| Example 3 (No gas flow forming step) | Acceptable (Slightly nonuniform) | 1100 | Good | Good |
| Comparative Example 2 (Only the feedstock) | Poor | N/A | N/A | N/A |
| Comparative Example 3 (Oxygen-containing feedstock gas) | Poor | N/A | N/A | N/A |
| Comparative Example 4 (Oxygen-free catalyst-activating substance) | Poor | N/A | N/A | N/A |
| Comparative Example 5 (No formation step) | Poor (Low yield) | 400 | N/A | N/A |

[Example 4]

[Production Using Granular Base Laminate]

The following describes a method for producing a single-walled CNT assembly of the present invention with a laminate of granular materials used as the base.

The producing method of Example 4 does not differ from the producing method of Example 1, except that a flat laminate prepared by laminating spherical silica particles with an average diameter of 300 $\mu$m to a thickness of 1 mm was used as the base 1. The laminate of silica particles were bedded on an alumina vapor-deposited, square type (4 cm $\times$ 4 cm) container of a netted stainless steel mesh. In this case, because the silica particles are laminated in 5 to 7 layers, the catalyst-activating substance comes into contact with the catalyst and the base 1 multiple times, at least 5 to 7 times, during the course of diffusion from the upstream supply side to the downstream discharge side (discharged parallel to the base holder 8).

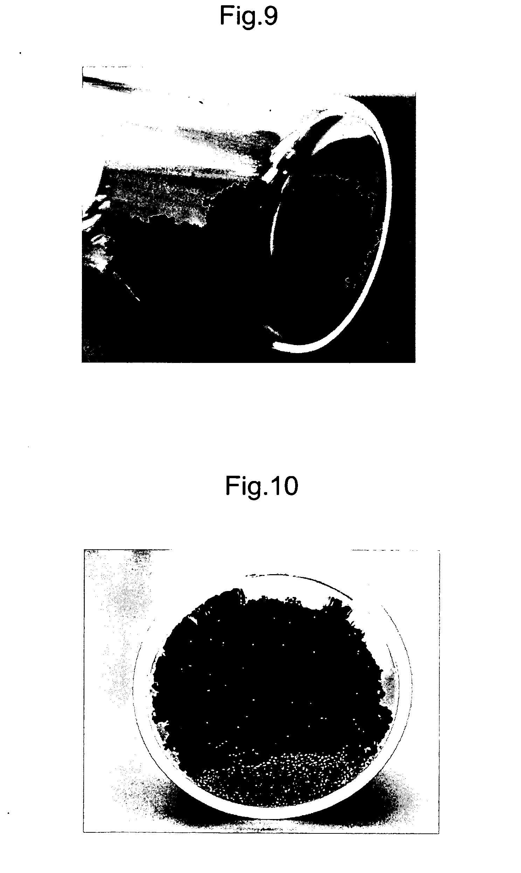

A CNT assembly was produced in the same manner as in Example 1 using the granular laminate, using carbon dioxide and acetylene as the catalyst-activating substance and the feedstock gas, respectively. With the carbon dioxide supplied in an optimum amount at which the ratio of the number concentration of the carbon atoms contained in the feedstock gas to the number concentration of the oxygen atoms contained in the catalyst-activating substance is 3, it was possible to desirably produce a CNT assembly of a high specific surface area from essentially all of the granular materials, as shown in Figs. 8 and 9.

[CNT Assembly Production Using Combinations of Feedstock and Catalyst-Activating Substance]

The following specifically describes production of a CNT assembly of the present invention with the laminate in the different combinations of feedstock and catalyst-activating substance examined in Example 1. CNT assemblies were grown under the same conditions used in Example 1, using the laminate used in Example 2. The producing steps were performed under the same conditions used Example 1, except that, in the growth step, two oxygen-free substances (acetylene and ethylene) were used as the feedstocks, and that five oxygen-containing substances (water, isopropanol, acetone, tetrahydrofuran, and ethanol) were used as the catalyst-activating substances aside from water. These materials were used in six different combinations: (ethylene and acetone), (ethylene and tetrahydrofuran), (ethylene and ethanol), (ethylene and isopropanol), (acetylene and water), and (acetylene and tetrahydrofuran).

Prior to the CNT assembly production in five combinations of feedstock gas and catalyst-activating substance, the optimum amount the catalyst-activating substance for the feedstock gas was examined. The optimum amount of catalyst-activating substance that maximizes the yield of the CNT assembly in 10 minutes of synthesis with the base 1 of Example 1 was determined. The optimum amount was 31 for the ethylene-acetone combination, 75 for the ethylene-tetrahydrofuran combination, 107 for the ethylene-ethanol combination, 187 for the ethylene-isopropanol combination, 67 for the acetylene-water combination, and 15 for the acetylene-tetrahydrofuran combination. With the catalyst-activating substance supplied in optimum amount, it was possible to desirably produce a CNT assembly of a high specific surface area from essentially all of the granular materials in all of the six combinations.

It can be seen that a CNT assembly of a high specific surface area can be desirably produced uniformly over the whole surface of the granular base laminate when the ratio of the number concentration of the carbon atoms contained in the feedstock gas to the number concentration of the oxygen atoms contained in the catalyst-activating substance generally ranges from 3 to 187.

[Comparative Example 6]

A CNT assembly was produced with the granular laminate of Example 4 in the manner described in Continuous Production of CNT Assembly Using Water and Ethylene in Comparative Example 1. Water was used as the catalyst-activating substance, and ethylene as the feedstock gas. With the water supplied in an optimum amount at which the ratio of the number concentration of the carbon atoms contained in the feedstock gas ethylene to the number concentration of the oxygen atoms contained in the catalyst-activating substance water is 375, it was not possible to desirably produce a CNT assembly from essentially all of the granular materials, as shown in Fig. 10. This is because of the failure to synthesize the CNT assembly from the granular material on the downstream side of the laminate. Conceivably, because a very trace amount of the supplied water is consumed every time the water comes into contact with the granular laminate, there is no sufficient amount water left to desirably produce the CNT assembly by the time the water has diffused to the granular material on the downstream side.

These results suggest that the ratio of the number concentration of the carbon atoms contained in the feedstock gas to the number concentration of the oxygen atoms contained in the catalyst-activating substance is important for producing a CNT assembly of a high specific surface area uniformly over the whole surface of the granular base laminate.

The results are summarized in Table 3. "Good" means uniform, stable CNT assembly production, "N/A" means no experiment results, and "Poor" means non-uniform, unstable CNT assembly production or no CNT assembly growth.

[Table 3]

| Catalyst-activating substance | Ethylene amount added (sccm) | Acetylene amount added (sccm) | Catalyst-activating substance amount added (ppm) | Ratio of carbon atom number concentration to oxygen atom number concentration | CNT assembly synthesis with laminate (Uniformity) |
|---|---|---|---|---|---|
| Acetone | 150 | 0 | 4800 | 31 | Good |
| Tetrahydrofuran | 150 | 0 | 2000 | 75 | Good |
| Ethanol | 150 | 0 | 1400 | 107 | Good |
| Isopropanol | 150 | 0 | 800 | 187 | Good |
| Water | 0 | 15 | 225 | 67 | Good |
| Carbon dioxide | 0 | 15 | 5000 | 3 | Good |
| Tetrahydrofuran | 0 | 15 | 1000 | 15 | Good |
| Water (Comparative Example 6) | 150 | 0 | 120 | 375 | Poor |

[Example 5]

[No Carbon Impurity Adhesion Suppressing Step]

A CNT assembly was synthesized according to the producing method of Example 4, using the same producing apparatus, base, and catalyst used in Example 4, without performing the carbon impurity adhesion suppressing step. The CNT assembly was immediately taken out of the heating region 7 after the synthesis. The CNT assembly grew, and had a specific surface area of about 900 m$^2$/g.

[Example 6]

[No Gas Flow Forming Means]

In the producing apparatus of Example 4, the feedstock gas was blown onto the catalyst layer 2 on the base 1 through the gas supply pipe 4 disposed 20 mm above the base 1, without using the gas flow forming means 9. The CNT assembly growth was uneven at the central portion and the peripheral portion of the catalyst layer 2 on the base 1, and the CNT assembly synthesized on the whole surface of the catalyst layer was slightly non-uniform. The specific surface area was about 1,100 m$^2$/g.

[Comparative Example 7]

[CNT Assembly Production Using Only Feedstock Gas]

A CNT assembly was produced using the feedstock gas ethylene and acetylene, without adding the catalyst-activating substance. The producing steps were performed under the same conditions used Example 4, except that the catalyst-activating substance was not added. The acetylene and ethylene were used in 15 sccm and 150 sccm, respectively. It was not possible to produce the CNT assembly on the laminate with the feedstock alone without the catalyst-activating substance. This is suggestive of the catalyst-activating substance being very important for CNT assembly production.

[Comparative Example 8]

[CNT Assembly Production Using Oxygen-Containing Feedstock Gas (Carbon Monoxide)]

A CNT assembly was produced using the feedstock carbon monoxide, a known feedstock gas for CNT production. Unlike ethylene and acetylene, carbon monoxide contains oxygen. The producing steps were performed under the same conditions used Example 4, except that the CNT assembly was produced in six different combinations of the feedstock gas carbon monoxide and the catalyst-activating substance (water, carbon dioxide, acetone, tetrahydrofuran, ethanol, isopropanol). CNT assembly production on the laminate was not possible in all cases. This suggests that the absence of oxygen in the feedstock gas is very important for CNT assembly production.

[Comparative Example 9]

[CNT Assembly Production Using Oxygen-Free Catalyst-Activating Substance (Ammonia)]

Ammonia, a known additive in CNT production, was used as the catalyst-activating substance to produce a CNT assembly. Unlike other catalyst-activating substances, ammonia does not contain oxygen. The producing steps were performed under the same conditions used Example 4, except that the CNT assembly was produced in two combinations of the feedstock gas ethylene and acetylene with the catalyst-activating substance ammonia. CNT assembly production on the laminate was not possible in either case. This suggests that the presence of oxygen in the catalyst-activating substance is very important for CNT assembly production.

[Comparative Example 10]

[No Formation Step]

A CNT assembly was produced according to the producing method of Example 2 using the same producing apparatus, base 1, and catalyst used in Example 2, without performing the formation step. There was CNT assembly growth, but with a very small yield. Further, because of the low single-walled CNT content, the specific surface area was only about 400 $m^2$/g. The results suggest that the formation step is very important for the efficient production of a CNT assembly of a high specific surface area.

The results are summarized in Table 4. "Good" means high-yield, uniform, and stable CNT assembly production, "N/A" means no experiment results, and "Poor" means low-yield, non-uniform, and unstable CNT assembly production or no CNT assembly growth. "Acceptable" means not as good as "Good", but more desirable CNT assembly production than "Poor" in terms of yield, uniformity, and stability.

[Table 4]

| | CNT assembly production with laminated base | CNT assembly uniformity with laminated base (Whole surface) | CNT specific surface area $m^2$/g |
|---|---|---|---|
| Example 4 | Good | Good | 1200 |
| Example 5 (No carbon impurity adhesion suppressing step) | Good | Good | 900 |
| Example 6 (No gas flow forming step) | Acceptable | Acceptable (Slightly nonuniform) | 1100 |
| Comparative Example 7 (Only the feedstock) | Poor | N/A | N/A |
| Comparative Example 8 (Oxygen-containing feedstock gas) | Poor | N/A | N/A |
| Comparative Example 9 (Oxygen-free catalyst-activating substance) | Poor | N/A | N/A |
| Comparative Example 10 (No formation step) | Poor (Low yield) | Poor | 400 |

[Example 7]

[Production Using Granular or Linear Base]

The following describes a producing method with a laminate of granular or linear materials used as the base.

The producing method of Example 7 does not differ from the producing method of Example 1, except that the silicon substrate of Example 1 used as the base 1 was replaced with a flat metallic mesh laminate configured from spherical granular material or SUS304 linear material. When granular material was used, the catalyst layer 2 was formed by sputtering while rotating the granular material.

The laminate of granular material or linear material was bedded on an alumina vapor-deposited, 4-cm$^2$ container of a netted stainless steel mesh. The granular material or linear material was laminated in 5 to 7 layers. Thus, the catalyst-activating substance comes into contact with the catalyst and the base 1 multiple times, at least 5 to 7 times, during the course of diffusion from the upstream supply side to the downstream discharge side (discharged parallel to the base holder 8).

A CNT assembly was produced in the same manner as in Example 1 using the laminate of granular material or linear material, using carbon dioxide and acetylene as the catalyst-activating substance and the feedstock gas, respectively. With the carbon dioxide supplied in an optimum amount at which the ratio of the number concentration of the carbon atoms contained in the feedstock gas to the number concentration of the oxygen atoms contained in the catalyst-activating substance is 3, it was possible to desirably produce a CNT assembly from essentially all of the granular materials and from the laminate.

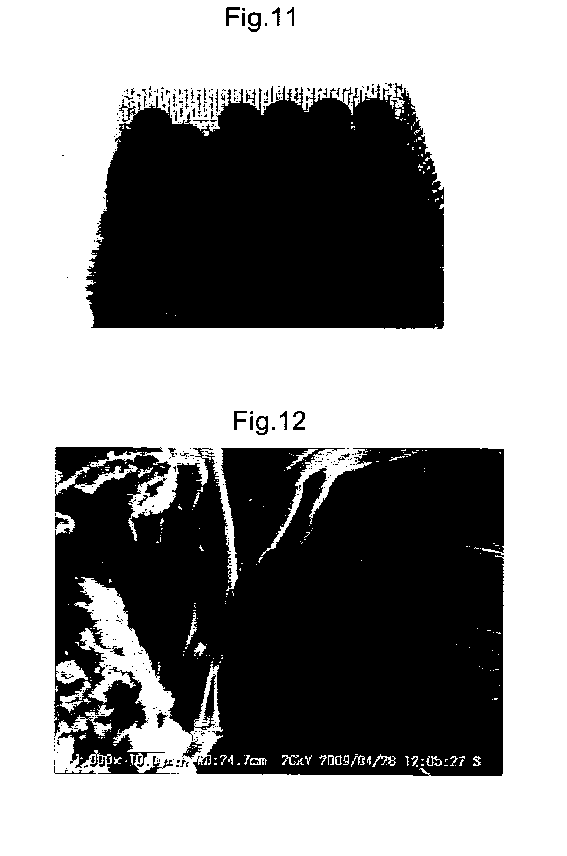

Fig. 11 shows a digital photograph of the single-walled CNT assembly grown on alumina particles having an average diameter of 3 mm. The single-walled CNT assembly structure had orientation, as shown in the SEM image of Fig. 12 observed at different magnifications at different locations.

Table 5 presents the results of single-walled CNT assembly production that used various granular materials and linear materials (wires) of different average diameters (curvatures) as the base.

[Table 5]

| Type | average diameter (μm) | CNT assembly production with laminated base | CNT assembly uniformity with laminated base (Whole surface) | CNT specific surface area (m$^2$/g) |
|---|---|---|---|---|
| Alumina particles | 2000 | Good | Good | 1200 |
| | 3000 | Good | Acceptable | 1200 |
| High-purity alumina particles | 300 | Good | Good | 1200 |
| | 2000 | Good | Good | 1200 |
| Silica particles | 300 | Good | Good | 1200 |
| | 100 | Good | Good | 1200 |
| | 50 | Good | Good | 1200 |
| Zirconia particles | 500 | Good | Good | 1200 |
| | 2000 | Good | Good | 1200 |
| SUS304 wire | 16 | Good | Acceptable | 900 |
| | 30 | Good | Good | 1200 |
| | 100 | Good | Good | 1200 |

In Table 5, "Good" under the column "CNT assembly production with laminated base" means successful CNT assembly production. Under the column "CNT assembly uniformity with laminated base (Whole surface)", "Good" means uniform CNT assembly production, and "Acceptable" means poorer uniformity. It can be seen that linear materials and granular materials with an average diameter of 16 μm to 3 mm are desirable for the CNT assembly production.

[Properties of CNTs Produced in Examples]

The properties of the single-walled CNT assembly depend on specific producing conditions. Under the producing conditions of Examples 1 to 7, the CNT assembly typically has a single-walled CNT content of 99% (the number proportion of the single-walled CNTs with respect to the double layer CNTs and multilayer CNTs, determined from the image of the synthesized single-walled CNT assembly observed under a transmission electron microscope), a weight density of 0.03 g/cm$^3$, a BET-specific surface area of 1,150 m$^2$/g, a carbon purity of 99.9%, and a Herman's orientation factor of 0.7.

[CNT Assembly Raman Spectrum Evaluation]

The Raman spectrum of the CNT assembly obtained in Example 1 was measured. A sharp G band peak was observed near 1,590 Kayser, which suggested the presence of a graphite crystalline structure in the CNTs forming the CNT assembly of the present invention.

A D band peak attributed to defect structures was observed near 1,340 Kayser, suggesting that the CNTs contained significant defects. Further, the RBM mode attributed to a plurality of single-walled CNTs, observed on the low-wavelength side (100 to 300 Kayser) suggested that the graphite layer was a single-walled CNT.

[Specific Surface Area of CNT Assembly]

A 50-mg mass was removed from the CNT assembly detached from the base, and was used for the measurement of liquid nitrogen adsorption-desorption isotherm at 77 K using BELSORP-MINI available from Bell Japan, Inc. (adsorption equilibrium time was 600 sec). The specific surface area was 1,150 m$^2$/g as measured from the adsorption-desorption isotherm using the Brunauer, Emmett, Teller method.

The adsorption-desorption isotherm of the unopened CNT assembly showed high linearity in a region with the relative pressure of 0.5 or less. $\alpha_s$ plot also showed high linearity in a region with the relative pressure of 1.5 or less. These results suggest that the CNTs forming the CNT assembly are unopened.

The specific surface area of the same CNT assembly was measured according to the method described in Nano Letters, Vol. 2 (2002), pp. 385 to 388. The total specific surface area was 1,149 m$^2$/g with an outer surface area of 1,090 m$^2$/g and an inner surface area of 59 m$^2$/g.

[Purity of CNT Assembly]

The carbon purity of the CNT assembly was determined from the result of elemental analysis using X-ray fluorescence. The X-ray fluorescence elemental analysis of the CNT assembly detached from the substrate revealed that the carbon weight percent was 99.98% and the iron weight percent was 0.013%. No other element was measured. From these results, the carbon purity was determined as 99.98%.

[Orientation Evaluation by θ-2θ Method]

The orientation evaluation of the CNT assembly was performed by X-ray diffraction measurement using the θ-2θ method, using an X-ray diffraction apparatus (Rigaku Gorp Diffractometer: RINT-2500/HRPBO) with a Cu-Ka X-ray source at 15 kW power. The X-ray spot size was 0.6 mm. The single-walled CNT assembly used as a specimen was a quadrangular prism measuring 1 m $\times$ 1 m $\times$ 10 mm as one of the specifications.

A low-angle (0 to 15 degrees) (CP) diffraction peak was observed, reflecting the interval between the single-walled CNTs. A broad diffraction peak was observed near 25 degrees, reflecting the interval of the carbon six-membered ring sheets of different single-walled CNTs. A diffraction peak was observed near 42 degrees, reflecting the (100) plane of the carbon six-membered ring of the single-walled CNT. A diffraction peak was observed near 77 to 78 degrees, reflecting the (110) plane.

The carbon six-membered ring structure of the single-walled CNT does not strictly coincide with the diffraction peak of the graphite, because the carbon six-membered ring structure of the CNT is round and curved. Identification of the diffraction peaks is possible, even though the peak positions slightly vary depending on the size and the degree of alignment of the single-walled CNT.

Herman's orientation factor F was calculated from these results. The value was 0.4 to 0.62 in the (CP) diffraction peak, and 0.75 in the (002) diffraction peak.

[Orientation Evaluation by Laue Method]

The degree of alignment of the CNT assembly was evaluated by X-ray diffraction measurement using the Laue method. A Bruker SMART APEX CCD area-detector diffractometer (Bruker) was used for the evaluation. Mo-Ka was used as the X-ray source (BRUKERAXS MO CE-SRA) at 4.5-kW power. The distance between the specimen and the X-ray detector was 5.968 cm, the size of the CCD detector was 6.1 × 6.1 cm, and the X-ray spot size was 0.5 mm.

The aligned single-walled CNT assembly used as the specimen was columnar in shape with 1 mm (diameter) × 0.5 mm (height) dimensions as one of the specifications.

The diffraction peaks ((CP), (002), (100), etc.) observed in the single-walled CNT assembly were elliptic, and showed anisotropy. Anisotropy suggests that the single-walled CNTs are aligned.

Herman's orientation factor F was calculated from these results. The value was 0.38 in the (CP) diffraction peak, and 0.61 in the (002) diffraction peak.

[Description of Reference Numerals and Signs]

1    Base
2    Catalyst layer
3    Synthesis furnace
4    Gas supply pipe
5    Gas exhaust pipe
6    Heating means
7    Heating region
8    Base holder
9    Gas flow forming means
10   Gas blowing means
11   Feedstock gas cylinder
12   Catalyst-activating substance cylinder
13   Atmosphere gas cylinder
14   Reducing gas cylinder
15   Carbon weight flux adjusting means
16   Carbon weight flux
17   Feedstock gas channel
18   Area of the surface where catalyst layer and feedstock gas channel crosses

## Claims

1. A method for producing a carbon nanotube assembly whereby a feedstock gas and a catalyst-activating substance are contacted to a catalyst on a base to grow a carbon nanotube,
   the method **characterized by** comprising:

   a formation step of supplying and contacting a reducing gas to the catalyst on the base, and heating at least one of the catalyst and the reducing gas to reduce the catalyst and/or particulate the catalyst; and
   a carbon nanotube growing step of contacting a carbon-containing, oxygen-free feedstock gas and an oxygen-containing catalyst-activating substance to at least one of the reduced catalyst and the catalyst particles formed in the formation step, and heating at least one of the catalyst, the catalyst particles, the feedstock gas, and the catalyst-activating substance to grow the carbon nanotube,
   wherein the ratio of the number concentration of the carbon atoms contained in the feedstock gas used in the carbon nanotube growing step to the number concentration of the oxygen atoms contained in the catalyst-activating substance used in the carbon nanotube growing step ranges from 0.5 to 200.

2. The method according to claim 1, wherein the feedstock gas contacts at least one of the catalyst and the catalyst particles on the base substantially vertically with respect to the surface of the base after forming multidirectional feedstock gas flows in directions substantially parallel to the surface of the base.

3. The method according to claim 1 or 2, wherein the feedstock gas and an atmosphere gas obtained by adjusting a carbon weight flux from feedstock gas and atmosphere gas supply amounts are supplied to a synthesis furnace to contact the feedstock gas in a substantially uniform amount to at least one of the catalyst and the catalyst particles on the base and grow the carbon nanotube.

4. The method according to any one of claims 1 to 3, further comprising a carbon impurity adhesion suppressing step after the carbon nanotube growing step.

5. The method according to any one of claims 1 to 4, wherein the feedstock gas is supplied after adjusting a carbon weight flux from feedstock gas and atmosphere gas supply amounts.

6. The method according to any one of claims 1 to 5, wherein the cross sectional area of a channel that flows the feedstock gas substantially coincides with the area of the surface where the feedstock gas flowing channel crosses the catalyst.

7. A method for producing a carbon nanotube assembly whereby a feedstock gas and a catalyst-activating substance are contacted to a catalyst-supporting granular or linear base to grow a carbon nanotube,
the method **characterized by** comprising:

a formation step of supplying and contacting a reducing gas to the catalyst, and heating at least one of the catalyst and the reducing gas to reduce the catalyst and/or particulate the catalyst; and
a carbon nanotube growing step of contacting a carbon-containing, oxygen-free feedstock gas and an oxygen-containing catalyst-activating substance to at least one of the reduced catalyst and the catalyst particles formed in the formation step, and heating at least one of the catalyst, the catalyst particles, the feedstock gas, and the catalyst-activating substance to grow the carbon nanotube,
wherein the ratio of the number concentration of the carbon atoms contained in the feedstock gas used in the carbon nanotube growing step to the number concentration of the oxygen atoms contained in the catalyst-activating substance used in the carbon nanotube growing step ranges from 0.5 to 200.

8. The method according to claim 7, wherein the granular or linear base has an average diameter of from 10 $\mu$m to 1 cm.

9. The method according to claim 7 or 8, wherein the feedstock gas contacts at least one of the catalyst and the catalyst particles on the base substantially vertically with respect to a surface of the base after forming multidirectional feedstock gas flows in directions substantially parallel to the surface of the base.

10. The method according to any one of 7 to 9, wherein the feedstock gas and an atmosphere gas obtained by adjusting a carbon weight flux from feedstock gas and atmosphere gas supply amounts are supplied to a synthesis furnace to contact the feedstock gas in a substantially uniform amount to at least one of the catalyst and the catalyst particles on the base and grow the carbon nanotube.

11. The method according to any one of claims 7 to 10, further comprising a carbon impurity adhesion suppressing step after the carbon nanotube growing step.

12. The method according to any one of claims 7 to 11, wherein the feedstock gas is supplied after adjusting a carbon weight flux from feedstock gas and atmosphere gas supply amounts.

13. The method according to any one of claims 7 to 12, wherein the cross sectional area of a channel that flows the feedstock gas substantially coincides with the area of the surface where the feedstock gas flowing channel crosses the catalyst.

# Fig.1

## Fig2

a)

b)

c)

d)

## Fig.3

## Fig4

## Fig.5

## Fig6

## Fig.7

## Fig.8

## Fig.9

## Fig.10

## Fig.11

## Fig.12

<table>
<tr><td colspan="2" align="center">**INTERNATIONAL SEARCH REPORT**</td><td colspan="2">International application No.<br>PCT/JP2010/060319</td></tr>
</table>

A. CLASSIFICATION OF SUBJECT MATTER
*C01B31/02*(2006.01)i, *B01J23/70*(2006.01)n

According to International Patent Classification (IPC) or to both national classification and IPC

B. FIELDS SEARCHED

Minimum documentation searched (classification system followed by classification symbols)
C01B31/02, B01J23/70

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)
JSTPlus/JMEDPlus/JST7580(JDreamII)

C. DOCUMENTS CONSIDERED TO BE RELEVANT

| Category* | Citation of document, with indication, where appropriate, of the relevant passages | Relevant to claim No. |
|---|---|---|
| A | JP 2008-137831 A (Nikon Corp.),<br>19 June 2008 (19.06.2008),<br>claims; example 1; paragraphs [0022], [0037],<br>[0044]; fig. 2, 7<br>(Family: none) | 1-13 |
| A | WO 2008/096699 A1 (National Institute of<br>Advanced Industrial Science and Technology),<br>14 August 2008 (14.08.2008),<br>claims; example 1; paragraphs [0019] to [0021],<br>[0032]; fig. 1, 4<br>& US 2010/0062157 A1 | 1-13 |
| A | JP 2008-201648 A (Mitsubishi Electric Corp.),<br>04 September 2008 (04.09.2008),<br>entire text; all drawings<br>(Family: none) | 1-13 |

[X] Further documents are listed in the continuation of Box C.    [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    10 September, 2010 (10.09.10) | Date of mailing of the international search report<br>    21 September, 2010 (21.09.10) |
|---|---|
| Name and mailing address of the ISA/<br>    Japanese Patent Office | Authorized officer |
| Facsimile No. | Telephone No. |

**INTERNATIONAL SEARCH REPORT**

International application No.

PCT/JP2010/060319

C (Continuation). DOCUMENTS CONSIDERED TO BE RELEVANT

| Category* | Citation of document, with indication, where appropriate, of the relevant passages | Relevant to claim No. |
|---|---|---|
| A | WO 2006/011655 A1 (National Institute of Advanced Industrial Science and Technology), 02 February 2006 (02.02.2006), entire text; all drawings & US 2008/0318049 A1 & EP 1787955 A1 & KR 10-2007-0064582 A & KR 10-2009-0080140 A & CN 101010260 A | 1-13 |
| A | JP 2008-260685 A (Hitachi Zosen Corp.), 30 October 2008 (30.10.2008), entire text; all drawings (Family: none) | 1-13 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003171108 A
- JP 2009208976 A
- JP 2008051321 A

### Non-patent literature cited in the description

- **Kenji Hata et al.** Water-Assisted Highly Efficient Synthesis of Impuriy-Free Single-Walled Carbon Nanotubes. *SCIENCE,* 19 November 2004, vol. 306, 1362-1364
- *Nano Letters,* 2002, vol. 2, 385-388